(19) **Europäisches Patentamt**
**European Patent Office**
**Office européen des brevets**

(11) **EP 2 945 113 A1**

(12) **EUROPEAN PATENT APPLICATION**

(43) Date of publication:
**18.11.2015 Bulletin 2015/47**

(51) Int Cl.:
*G06Q 30/02* (2012.01)    *H04N 21/25* (2011.01)
*H04N 21/258* (2011.01)    *H04N 21/442* (2011.01)
*H04N 21/45* (2011.01)

(21) Application number: **15166918.1**

(22) Date of filing: **08.05.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **14.05.2014 IN DE12852014
01.07.2014 US 201414321017**

(71) Applicant: **Cisco Technology, Inc.
San Jose, CA 95134-1706 (US)**

(72) Inventors:
• **Srinivasan, Prabhakar**
**95131, CA California San Jose (US)**
• **Smith, Trevor**
**Twickenham, Hampshire TW2 7SQ (GB)**
• **Hall, Nicholas Ashton**
**Walton-on-Thames, Hampshire KT12 3AT (GB)**
• **Whinmill, Trevor**
**Southampton, Hampshire SO31 9JT (GB)**

(74) Representative: **White, Duncan Rohan
Marks & Clerk LLP
Fletcher House (2nd Floor)
Heatley Road
The Oxford Science Park
Oxford OX4 4GE (GB)**

(54) **AUDIENCE SEGMENTATION USING MACHINE-LEARNING**

(57) A method and system for audience segmentation is described, the method and system including preparing a plurality of guidebooks of prior probability distributions for content items and user profile attributes, the prior probabilities and user profile attributes being extractable from within audience measurement data, receiving raw audience measurement data, analyzing, at a processor, the received raw audience measurement data using the prepared plurality of guidebooks, generating a plurality of clusters of data per user household as a result of the analyzing, correlating viewing activity to each cluster within an identified household, predicting a profile of a viewer corresponding to each cluster within the identified household, applying classifier rules in order to assign viewing preference tags to each predicted profile, and assigning each predicted profile viewing preferences based on the viewing preference tags assigned to that profile Related systems, methods, and apparatus are also described.

FIG. 3

EP 2 945 113 A1

**Description**

FIELD OF THE INVENTION

The present invention relates to methods and systems for audience segmentation, and more particularly, to methods and systems for audience segmentation using machine learning.

BACKGROUND OF THE INVENTION

Accurate audience segmentation depends on possessing accurate facts about the composition of the audience. In the broadcasting domain, even though EPG (electronic program guide) applications might provide an interface for 'signing-on' and eliciting the profile of viewers, prior to a viewing activity the viewers may not access this interface or select an incorrect profile. Alternatively, viewers in the same household might leave and others begin viewing without changing the EPG profile. So, for instance, a child might be viewing a cartoon, and when the cartoon ends, the child's mother might, without switching the user profile, change the channel to view the news.

BRIEF DESCRIPTION OF THE DRAWINGS AND APPENDICES

The present invention will be understood and appreciated more fully from the following detailed description, taken in conjunction with the drawings in which:

Fig. 1 is a simplified illustration of decomposition of exemplary household viewing patterns into individual clusters, in accordance with an embodiment of the present invention;
Fig. 2 is a simplified pictorial depiction of the process of audience segmentation which produces the exemplary clusters of Fig. 1;
Fig. 3 is a data flow diagram of a method of guide book preparation in the system of Fig. 2;
Fig. 4 is a data flow diagram of a method of training in the system of Fig. 2;
Fig. 5 is a data flow diagram of a method of detection in the system of Fig. 2;
Fig. 6 is a flowchart diagram of a method of implementing the system of Fig. 2;
Fig. 7A is a two-dimensional scatterplot of the data presented in Appendix A, after principal component analysis has been performed on the data; and
Fig. 7B is a three-dimensional scatterplot of the data presented in Appendix A, after principal component analysis has been performed on the data.

The present invention will be understood and appreciated more fully from the following detailed description, taken in conjunction with the appendix in which:

Appendix A is a presentation of aggregated raw data for customer householdid = 620428623;
Appendix B is a presentation of the data of Appendix A presented in Java Script Object Notation (JSON);
Appendix C is a lexographically ordered listing of all of the unique values in Appendices A and B;
Appendix D is a listing of the first five sample feature vectors of normalized unit length for the data of Appendices A and B;
Appendix E which captures the first five rows, by way of illustrating the above, of Appendices A and B (i.e. the input data) transformed from feature space to component space;
Appendix F is an exemplary Python language code routine for performing clustering; and
Appendix G is a list of has the sample means and standard deviations for the various content items in the present example.

DETAILED DESCRIPTION OF AN EMBODIMENT OVERVIEW

A method and system for audience segmentation is described, the method and system including preparing a plurality of guidebooks of prior probability distributions for content items and user profile attributes, the prior probabilities and user profile attributes being extractable from within audience measurement data, receiving raw audience measurement data, analyzing, at a processor, the received raw audience measurement data using the prepared plurality of guidebooks, generating a plurality of clusters of data per user household as a result of the analyzing, correlating viewing activity to each cluster within an identified household, predicting a profile of a viewer corresponding to each cluster within the identified household, applying classifier rules in order to assign viewing preference tags to each predicted profile, and assigning each predicted profile viewing preferences based on the viewing preference tags assigned to that profile Related systems, methods, and apparatus are also described.

EXEMPLARY EMBODIMENTS

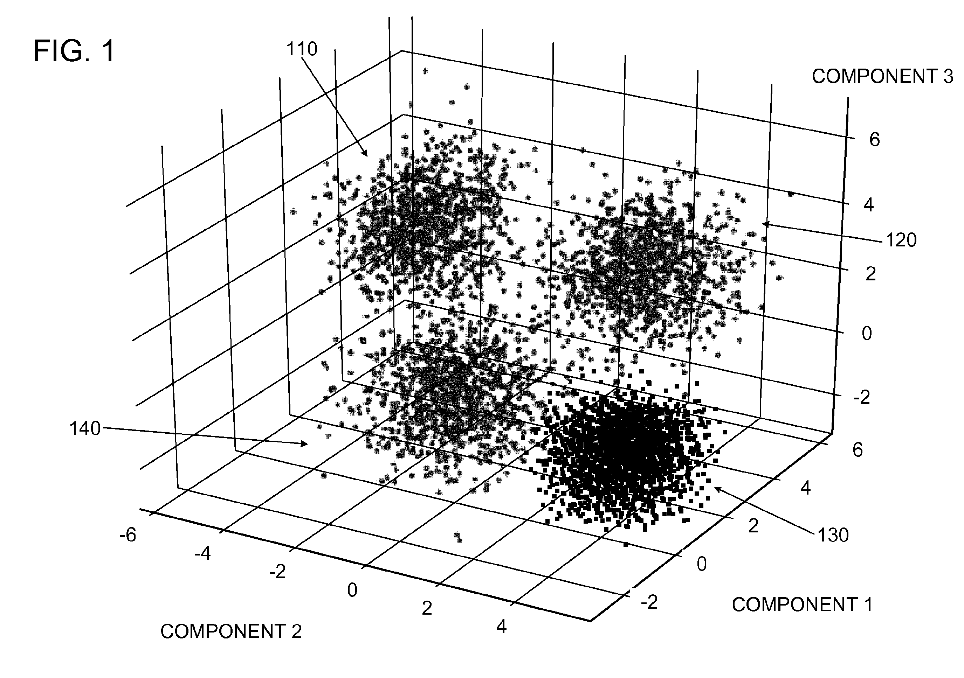

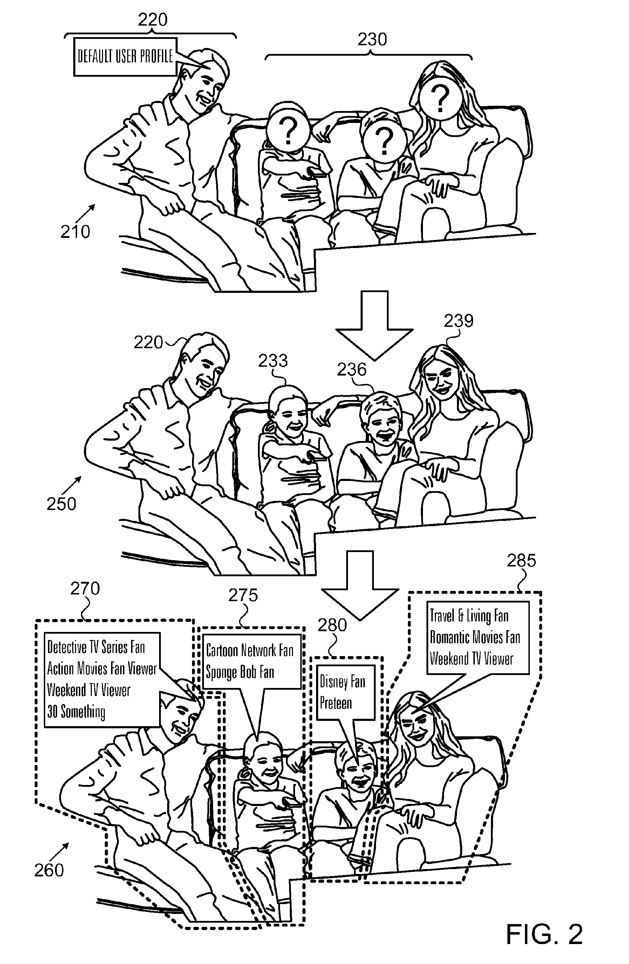

Reference is now made to Fig. 1, which is a simplified illustration of decomposition of exemplary household viewing patterns into individual clusters, in accordance with an embodiment of the present invention. Reference is additionally made to Fig. 2, which is a simplified pictorial depiction of the process of audience segmentation which produces the exemplary clusters of Fig. 1.

It is often the case that all the viewing activity gets attributed to a default profile which is typically that of the primary account holder for the household. When the user profile is not explicitly available or when it is incorrectly set, then determining the number of viewers in a household based on the viewing habits and the content being viewed, becomes a challenge. A 'pure' machine learning approach that uses both supervised and unsupervised learning techniques could provide the solution to this problem. That is to say, that at a high level machine learning algorithms are of two types: supervised and unsupervised. Both require a training cycle but the supervised data has the 'ground truth' (discussed below) as part of the training data. In unsupervised data the pattern is not part of the training data but rather 'emerges' as a result of the training cycle.

To determine the number of people in a household, the raw data of all viewing activity for the household is collected along with the content metadata and data about which device(s) the content was consumed on. The collected raw data includes, but is not necessarily limited to:

- Viewing activity (Session, Household Account, Channel, Time of day, Content Ref)
- Content metadata (i.e. Title, Synopsis, Genre(s) etc...)
- User data (Device, IP address, Geo Location etc...)
- UI Navigation data (audit trail to navigate the EPG, locate and tune to content)
- Frequency Response Data - Viewing patterns that are roughly periodic but do not by themselves constitute a significant amount of viewing time.

Typically the viewing activity is tracked server-side by the service providers as UsageReports and these are ingested as input to the clustering algorithm by custom designed processes which extract the data needed for the subsequent analysis. These processes then transform the raw data into a format needed for the subsequent analysis. Finally, the extracted and transformed data is loaded into a database on a computing device with the required processors which are able to perform the subsequent analysis (described below). In practice, a tracking component might be operating at a broadcast headend from where the content is delivered to client devices.

It is appreciated that the various steps of the present invention are typically performed on one or more computing devices comprising at least one processor, and may comprise more than one processor. One of the processors may be a special purpose processor operative to perform the steps described below, according to the method described herein. In addition, the on one or more computing devices comprise non-transitory computer-readable storage media (i.e. memory). The memory may store instructions, which at least one of the processors may execute, in order to perform the methods described herein.

The raw data is derived from operational data which is readily collectable. Attributes which are typical of user profile data are not part of the raw data which is readily collectible. Such attributes include, but are not necessarily limited to age, gender, city, and so forth.

The viewing data of a household is decomposed into individual patterns using viewing activity data, user profile data and content metadata. As will be explained below, unsupervised machine learning techniques, such as clustering algorithms, are applied to the data so that the individual patterns 'emerge' as clusters in a high-dimensional vector space representing the data.

As depicted in the first pane 210 of Fig. 2, a default user profile 220 is assumed by the system, where the term "system", is understood to refer to some module comprising an appropriate mechanism such as a headend component like a UserIdentity process, or a User or Subscriber Management System which tracks billing information of account holders. It is appreciated that these examples are not meant to be limiting, and other appropriate mechanisms might be implemented by persons of skill in the art. Other users 230 do not yet have a profile. As time goes by, a history of viewing data is accumulated by the system. The viewing data includes, but is not limited to which content items are viewed, which channels are viewed, how long each content item is viewed for, what are the beginning and ending times of viewing each content item, the type of viewing, i.e. live viewing, video-on-demand (VOD) viewing, time-shifted viewing, etc.

As depicted in Fig. 1, the data collected is analyzed. In one part of the data analysis, the data is de-noised. The data is going to be initially in the form of viewing actions across all households. These are aggregated per household. If there are viewing activities reported with a small time duration these are considered noise and removed. This differentiates sustained viewing from channel changes. Time thresholds are set to differentiate sustained viewing from channel changes. It should be appreciated that surfing activity might also be subjected to further analysis, as patterns in surfing may help identify individuals (i.e. repeating sequence of channels surfed at times of day, week etc.). Sustained viewing information is extracted from the collected raw data, and is aggregated per household.

The aggregated viewing data is then converted into feature vector representation. For example, and without limiting the generality of the foregoing, if the viewing activity of a household is represented as follows:

activity = [{"genre":"GEN:9999","session_TIME bin":"TIME 4_TO_7","channelId":"90050","type":"PRT:PRG"," contentId":"4692","televisionId":"134802"}, {"genre":"GEN:9999","session_TIME_bin":"TIME_4 _TO_7","channelId":"90053","type":"PRT:PRG","c ontentId":"4692","televisionId":"14203"}, {"genre":"GEN:0901","session TIME bin":"TIME_1 9_TO_21","channelId":"71","type":"PRT:PRG","co ntentId":"5574","televisionId":"134802"}, {"genre":"GEN:0641","session_TIME_bin":"TIME_4 _TO_7","channelId":"57","type":"PRT:PRG","cont entId":"111","televisionId":"134802"}, {"genre":"GEN:0901","session TIME bin":"TIME_1 9_TO_21","channelId":"71","type":"PRT:PRG","co ntentId":"5574","televisionId":"134802"}, {"genre":"GEN:0901","session TIME bin":"TIME_1 9_TO_21","channelId":"71","type":"PRT:PRG","co ntentId":"5574","televisionId":"14203"}, {"genre":"GEN:1207","session_TIME_bin":"TIME_4 _TO_7","channelId":"11791","type":"PRT:PRG","c ontentId":"3126","televisionId":"30203"}, {"genre":"GEN:8888","session_TIME_bin":"TIME_4 _TO_7","channelId":"223","type":"PRT:PRG","con tentId":"7518","televisionId":"14203"}]

Then the feature vectors are:

0., 0., 0., 0., 1., 0., 0., 0., 1., 0., 0., 0., 0., 0., 1., 0., 1., 1., 0., 0., 1. 0., 0., 0., 0., 1., 0., 0., 1., 0., 0., 0., 0., 0., 0., 1., 0., 1., 0., 1., 0., 1. 0., 0., 0., 1., 0., 0., 0., 0., 0., 1., 0., 0., 1., 0., 0., 0., 1., 0., 1., 0., 0., 1. 0., 0., 1., 0., 0., 0., 1., 0., 0., 0., 0., 1., 0., 0., 0., 0., 0., 1., 1., 0., 0., 1. 0., 0., 0., 1., 0., 0., 0., 0., 0., 1., 0., 0., 1., 0., 0., 0., 1., 0., 0., 1., 0., 1., 0., 0., 1. 0., 0., 0., 1., 0., 0., 0., 0., 0., 1., 0., 0., 1., 0., 0., 0., 1., 0., 0., 1., 0., 1. 1., 0., 0., 0., 0., 0., 1., 0., 0., 0., 0., 1., 0., 0., 0., 1., 0., 0., 1., 1. 0., 1., 0., 0., 0., 0., 0., 0., 0., 1., 0., 0., 0., 1., 0., 0., 1., 0., 1., 0., 1.

This transformation is achieved by converting categorical data into feature vectors for each feature.

Outlier detection is done and outliers are removed using techniques discussed below. Principal components analysis is used to extract the most relevant components from the feature vectors. The resulting principal components are then sent for clustering. Clustering is an unsupervised machine learning algorithm (which may be implemented, for example, in Java) which takes as input the feature vectors which are created using the principal components analysis process (which may also be implemented in Java). The result of the feature vector extraction process could pass the data in-memory to the clustering process. The clustering process identifies clusters of data points such as exemplary clusters 110, 120, 130, 140.

It is appreciated that references to Java are given herein the previous paragraph by way of example only. In that many languages have machine learning libraries there is no particular restriction to Java. Other choices of programming language include, but are not limited C++, Python, R.

After the clusters are revealed by the clustering process, the clusters 110, 120, 130, 140 are mapped to profiles for individual users 220, 233 236, 239, as depicted in the second pane 250 of Fig. 2. As depicted in the third pane 260 of Fig. 2, it is then possible to analyze the clusters and to make predictions 270, 275, 280, 285, based on the nature of the cluster, as to the number of user profiles (four in the present depiction) in the household, the age (a father and a mother in their mid- thirties) and viewing preferences (depicted in the figure) of each of the users who are represented by a user profile, and so forth. It is the hypothesis of the inventors of the present invention that given a statistically significant dataset of viewing activity of any household, distinct individual patterns must emerge. So each viewing activity is ascribed to one profile only. It is appreciated that, for instance, there are cases where parents might watch similar content so that there is a possibility of partial membership to more than one cluster with a confidence interval. This is also handled as part of this invention although not mentioned explicitly. As is well known in that art, in the Fuzzy c-Means clustering algorithm each point belongs to all the clusters in the data with varying levels of 'belongingness'. Accordingly, Fuzzy c-Means clustering algorithm is used to address the possibility that a point could belong to multiple clusters with varying probabilities. Cluster ID with the largest probability of membership is assigned to the data point in question. That is to say that the ID of the cluster which has the largest probability of 'belongingness' for a given data point is chosen as the cluster ID of the data point. It follows that there might be other potential areas of overlap between members of the same household, which can, mutatis mutandis be resolved in a similar fashion.

As was noted above, the system works with the assumption that all viewing is attributed to the identity of the individual who created an account with the TV service. Audience profiling attempts to accurately map the viewing activity of the household to the individuals who comprise the household in an automatic and unobtrusive manner without the need for any additional monitoring equipment at the customer premises. It is appreciated that in the art the terms "Audience Segmentation" and "Customer Segmentation" synonymously. In embodiments of the present invention, Audience profiling is comprised of household decomposition (determining the number of individuals in a household) and applying the KBS system described herein (i.e. applying the descriptive tags for each profile in a household).

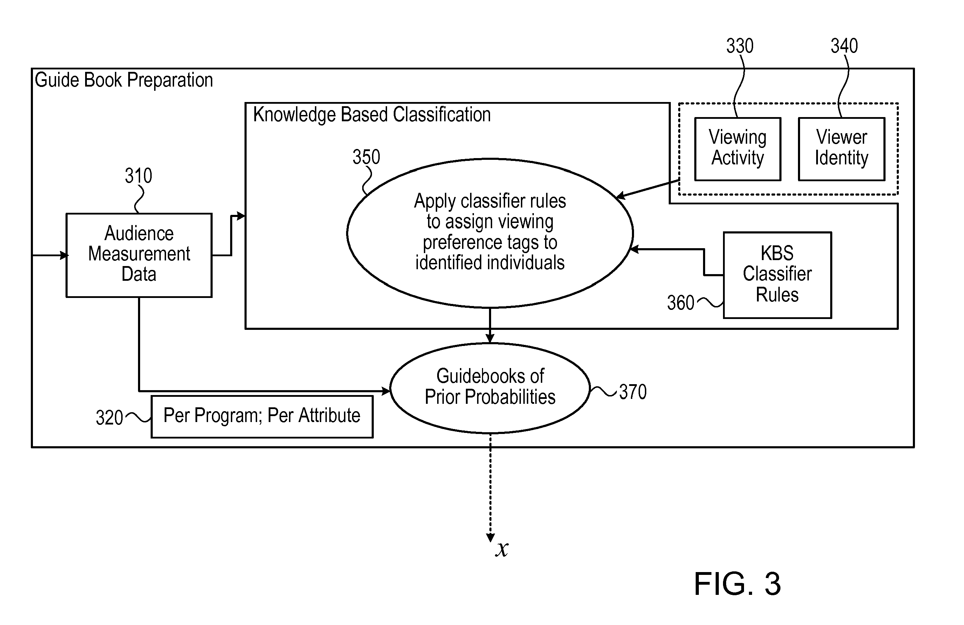

Reference is now made to Fig. 3, which is a data flow diagram of a method of guide book preparation in the system of Fig. 2.

Various existing audience measurement data are selected for use, typically from external sources. Such audience measurement data may include, but is not limited to Broadcasters' Audience Research Board (BARB), Nielsen Ratings, and so forth, as appropriate for any given geographical region (i.e. in the UK it would be appropriate to use BARB, while in the US it would be appropriate to use Nielsen Media Research ratings, in Germany it would be appropriate to use Gesellschaft für Konsumerforschung (GfK) ratings, and so forth).

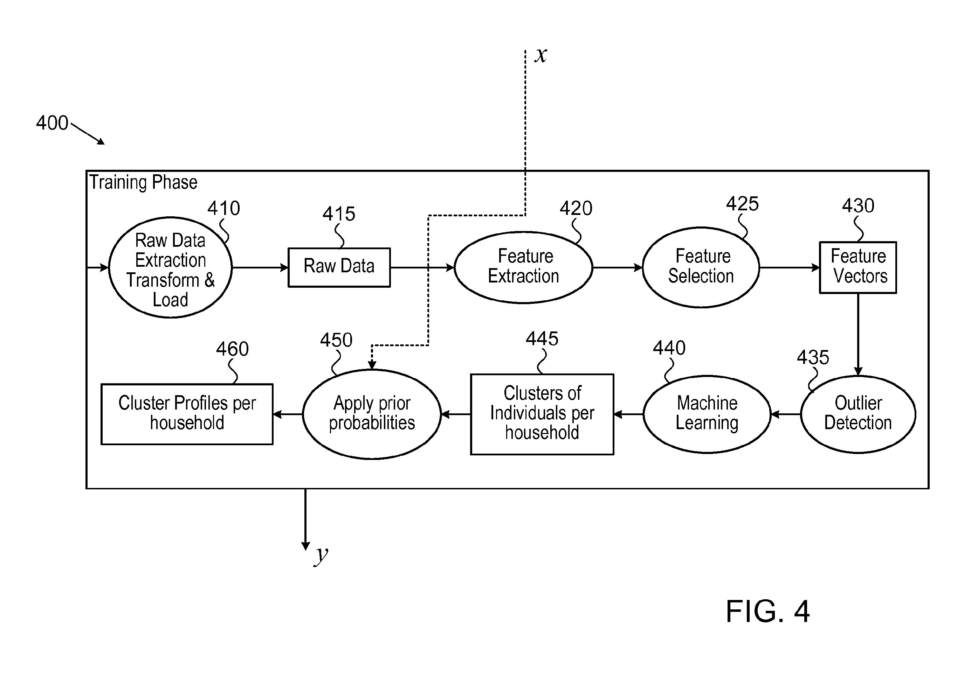

The selected audience measurement data 310 is pre-processed to create three types of guidebooks of prior probability distributions for content items and user profile attributes available within the audience measurement data 310 set. The various guidebooks are used, as will be explained below, with reference to Fig. 4, within the training phase.

Prior probabilities are computed per content item per attribute 320 (e.g., age, gender, region etc.,) using the audience measurement data 310 as 'ground truth'. This comprises the 'guidebook' of probabilities at a content item level.

Assume the following exemplary content:

| Name | Channel | Type | Total Viewers | Avg. Age | Std. Dev. |
|------|---------|------|---------------|----------|-----------|
| Matrix | HBO | Movie-VideoOnDemand | 100,000 | 22 | 1.2 |
| Doctor Who | BBC | FreeView-TV Series | 150,000 | 30 | 4.5 |
| Grey's Anatomy | ABC | FreeView-TV Series | 50,000 | 35 | 5.0 |
| Lord of the Rings | HBO | Movie-VideoOnDemand | 30,000 | 25 | 2.0 |
| Golf US Open | ESPN | Free View-Program | 120,000 | 50 | 2.2 |

The term "guidebook" as used in the present specification and claims, in all of its grammatical forms refers to a look-up table of prior probabilities to measure an association likelihood between descriptive attributes (for example - [Person: age, gender]; [Life Stage: Single, Young Couple, Family, Post-Family, Retired]) and TV viewing patterns. The guidebook (i.e. look-up table) is referenced to provide likelihood estimations of associating a descriptive attribute to a household based upon the household's captured set of viewing activity.

This first guidebook attempts to answer the question "Of all the people who watched a content item identified uniquely by a content item ID, what is the mean, standard deviation for various attributes for the persons. This information is available through self-declaration of a panel of participants in the audience measurement dataset. The low standard deviation for Golf US Open indicates that the range of ages of viewers of this content item is tightly clustering around the mean of age 50. On the other hand, the high standard deviations for TV series programs (i.e. content items) like Grey's Anatomy indicate that viewers with a wider range of ages watch this content item.

Viewing activity 330 and panelist (viewer) identity 340 are extracted from the audience measurement data and fed into a knowledge based system (KBS) 350 which classification rules 360 are applied 350 and used to assign tags representing viewing preferences to the individuals in the panel. A guidebook is then prepared for the 'tags' assigned by the knowledge-based system (KBS).

By way of example, a sample KBS rule is "If 50% of the viewing activity of a person is on ESPN then the person is termed as ESPN_Fan". These KBS rules are heuristics which are derived from and influenced by the audience measurement data. For instance during the Olympics many people watch more ESPN than they would typically do so otherwise, so the threshold for ESPN_Fan is normalized based on what is known as ground truth from pre-Olympic audience measurement data. A user, who spent 80% of her viewing time watching ESPN, on average before the Olympics, while the before-Olympics average for all users is 30% of viewing time watching ESPN, would be classified as an ESPN fan, During the Olympics, however, it would be expected that these averages would increase for both an ESPN fan and a person who would not otherwise be classified as an ESPN fan.

By normalization ESPN_Fan is prevented from being assigned to everyone automatically during the month of Olympics. So the audience measurement dataset helps to prepare the heuristics. Similarly a 'late-night-viewer' tag is probably applied to someone who consistently views television programs (i.e. content items) after 10:00 PM and who lives in the suburbs and rural areas, and possibly in urban areas the tag is only applied to someone who consistently views television programs (i.e. content items) after 12:00 AM. So the thresholds on which the rules are applied are adjusted accordingly.

For example, KBS tags may be generated as follows for exemplary viewing events:

| Name | KBS Tag |
|---|---|
| Matrix | "SciFi_Movies_Fan" |
| Doctor Who | "SciFi_TVSeries_Fan" |
| Grey's Anatomy | "Greys_Anatomy_Fan" |
| Lord of the Rings | "Fantasy_Movies_Fan" |
| Golf US Open | "Golf_Fan" |

In the above table, it is noted that the majority of the exemplary KBS tags are content-category based: "SciFi_Movies_Fan"; "SciFi_TVSeries_Fan"; "Fantasy_Movies_Fan"; "Golf_Fan". However, one of the exemplary KBS tags is series / title based" "Greys_Anatomy_Fan". It is appreciated that this is illustrative of the flexibility of the KBS system. If the rules (heuristics) are written in a manner that they monitor and are applied upon Series/Title name then they would be so applied. If the rules are written to fire upon content category then they would. This allows a large vocabulary whereby individual viewing behavior and affinity towards content types or even specific instances of content may be defined.

Each household accumulates a group of tags over a period of viewing activity. The goal of this second KBS-tags-guidebook is to answer the question, "What is the probability of finding a Golf_Fan in a given household". Using this guidebook it is also possible to compute joint probabilities, for example, "What is the probability for a household to contain a Golf_Fan and a SciFi_Movies_Fan?"

The third guidebook advises on the probabilities of family types (e.g., single individual households, married with children households etc.,). For example, in a panel size of 6000, there are 500 single individual households:

| Number of Individuals per household | Total Households |
|---|---|
| 1 | 500 |
| 2 | 1400 |
| 3 | 2000 |
| 4 | 500 |
| 5 | 300 |
| 6 | 200 |
| 7 | 70 |
| 8 | 30 |

This household-level guidebook attempts to answer the question "What is the probability of finding a single individual household". It is appreciated that the guidebook of probabilities is prepared for known content. This is used to answer questions like "For a given content item what is the likely age, gender, income status, region, working status, life-stage". A similar guidebook is prepared to answer questions such as "For the randomly selected panel of the audience measurement (e.g. BARB) audience, what is the distribution of family sizes and how likely is some family to be a single household family". This second guidebook may or may not be used to reinforce the prediction due to the first guidebook. Guidebooks of prior probabilities 370 include both of these guidebooks, as will shortly be explained.

The combination of the three guidebooks 370 mentioned above (i.e. the prior probabilities guidebook, the panelist / BARB produced guidebook, and the guidebook of known probabilities) would be able to answer the question "What is the probability of a single-individual household containing a Golf_Fan and what is the probability that the individual is a male and holds a High-Income job and hails from London?" Audience measurement data such as BARB reports the following as part of the user profile:

Age;
Gender;
Region;
Income Group;
Working Status; and;

Life Stage.

Thus, a guidebook of prior probabilities (i.e. the first guidebook mentioned above) enables providing the most probable value for the above-mentioned six attributes for any given viewer based on the content viewed.

Reference is now made to Fig. 4, which is a data flow diagram of a method of training 400 in the system of Fig. 2. In a first stage of training 400, the raw data concerning viewing habits is extracted 410. Persons of skill in the art will appreciate that the ETL (Extract; Transform; Load) stage of the big data pipeline, depicted in Fig. 4, converts the ingested data coming from the service provider headend into a format which comprises viewing activity enriched with content metadata and grouped by the household ID. The collected / extracted raw data 415 includes, but is not necessarily limited to:

- Viewing activity (Session, Household Account, Channel, Time of day, Content Ref)
- Content metadata (i.e. Title, Synopsis, Genre(s) etc...)
- User data (Device, IP address, Geo Location etc...)
- UI Navigation data (audit trail to navigate the EPG, locate and tune to content)
- Frequency Response Data - Viewing patterns that are roughly periodic but do not by themselves constitute a significant amount of viewing time.

The above data items are extracted 420 on-the-fly and all the pieces of raw data are converted into 'raw' feature vectors.

Thus, as data is prepared in unstructured or semi-structured ad hoc representations from various endpoints including from the customer sources to be provisioned in a structured manner compliant with the input format as needed and described below. This is achieved in the Raw Data Extraction-Transformation-Load 410 step.

Feature Extraction 420 involves the transformation of the categorical data and numerical data into a high-dimensional vector representation. By way of example, in the following, "city" is a categorical attribute while "temperature" is a traditional numerical feature:

```
>>> measurements = [
...     {'city': 'Dubai', 'temperature': 33.},
...     {'city': 'London', 'temperature': 12.},
...     {'city': 'San Francisco', 'temperature': 18.},
... ]
```

```
>>> vec.fit_transform(measurements).toarray()
array([[  1.,   0.,   0.,  33.],
       [  0.,   1.,   0.,  12.],
       [  0.,   0.,   1.,  18.]])
```

This process also performs a min-max normalization where necessary for various features likes Age or Income.

The final high-dimensional vector that represents a raw data sample is also normalization using the Frobenius normalization scheme to ensure that the vector is a unit vector. It is appreciated that most clustering algorithms expect the data to be in a unit space in order to work correctly. Applying the Frobenius normalization and dividing each dimension of vector by the length of the vector ensures that the vectors have a unit length. By way of example, after normalization of a vector <1,2,2> the result is <0.33,0.66,0.66 >

A feature selection 425 step pre-processes the raw feature vectors 430 into statistically significant features called Principal Components using Principal Component Analysis (PCA) technique. Non statistical feature selection approaches using Random Forests are also explored and used where appropriate. Those skilled in the art will appreciate that there are two well-known schemes of feature selection. One such scheme is a statistical scheme, and the other scheme is based on machine learning. The Statistical or PCA scheme extracts principal components and the components which capture 95% of the variance are chosen. This is a dimensionality reduction technique. PCA has 2 disadvantages:

Since PCA is a dimensionality reduction technique, if points of an input set are positioned on the surface of a hypersphere, no linear transformation can reduce dimension (nonlinear transformation, however, can easily cope with this task).

The directions maximizing variance do not always maximize information.

Accordingly, a non-linear separation of the features based on a decision tree approach like random forest is also used as an alternative. A control set of households in the audience measurement (e.g. BARB) dataset for which the number of individuals in the household is known is used to evaluate both techniques. The technique of the two techniques which is observed to have the higher precision is chosen for use.

If random forest based feature selection is done then PCA is not required. Only one approach is necessary. A cross-validation score of the 2 approaches for a dataset could be used to benchmark both approaches and the one with the higher precision score could be used

Outliers in the data are detected and removed 435. The state-of-the-art clustering algorithms based on tree-based clustering techniques like Random Forests are used. The less dense part of the tree-based clustering can be pruned and this provides a capability to detect and eliminate outliers. Outlier viewing behaviour can also be removed using statistical measures like Interquartile region analysis. Those skilled in the art will appreciate that a statistical InterQuartile Range technique can detect outliers. Random Forest can also be used to detect outliers. A manual inspection of a few control test cases by a panel of experts would indicate the precision of outlier detection across a large set of test cases. If the algorithm flagged outliers matches intuitive human meaning of outliers for the dataset for a few household test cases, then the algorithm with the higher precision is chosen. However, both approaches are valid for a given dataset.

The feature space can be represented as comprising a matrix with rows representing data samples and columns representing features and, after outlier detection and removal, the number of rows would shrink. By contrast, the number of columns (i.e. features) would be unchanged. Said feature space is now made of Principal Components and these are submitted to a batched process to perform the Unsupervised Machine Learning 440 method that does clustering 445. Many clustering methods are evaluated and the right one is chosen that can deal with the scale and dimensionality of the data. Typically, K-means clustering is used. Fuzzy K-means clustering can handle overlapping clusters. Canopy clustering can automatically detect stable number of clusters for a given dataset. An alternative method of clustering, random forest based clustering is a tree-based clustering is an equally effective technique.

The output of the clustering algorithm correlates each viewing activity, in the training set, to an identified cluster. The three pre-processed guidebooks 450 (see item 370, depicted in Fig. 3, and described herein above, denoted in Fig. 4 as input "x") are used to define classifier rules to assign meaningful labels (e.g. Mother, Father, 40 year-old male etc.,) to each identified cluster. The cluster label acts as an alias for the profile of the viewer or household. All the viewing activity in a household can be decomposed into unique clusters which match the number of individual users 460. It is appreciated that Fuzzy k-means clustering can assign probabilities of membership to clusters. This can be converted to hard clustering for convenience assuming the cluster ID with the largest probability is the ID assigned to a data sample. If one cluster ID does not emerge as a winner with a clear margin in terms of probability value then the data sample is not assigned a cluster ID. The clear margin is chosen as a heuristic value using a control test dataset of household for which is known the composition from audience measurement dataset. For our purposes, each cluster model for an account is indexed by the account ID referenced within the viewing activity. The predicted attributes (e.g., age, gender etc.,) for an unknown viewer's viewing event are combined using Maximum Likelihood Estimation or using a Naïve Bayes Classifier which can then assign a profile description to the unknown users in the household. This provides the capability to pin an identity to the unknown profile of a viewer (refer to Fig. 2).

An aggregated set of viewing activity tends to correlate more accurately with each individual's viewing habits and the clusters get separated more clearly in the vector space model. The more aggregated viewing activity that can be presented to the training stage, the more accurately the model can map the household's individuals

The trained model (set of cluster labels per household) is then sent to a detection engine comprised in a headend based system, for storage and also to be ready for online query processing stage.

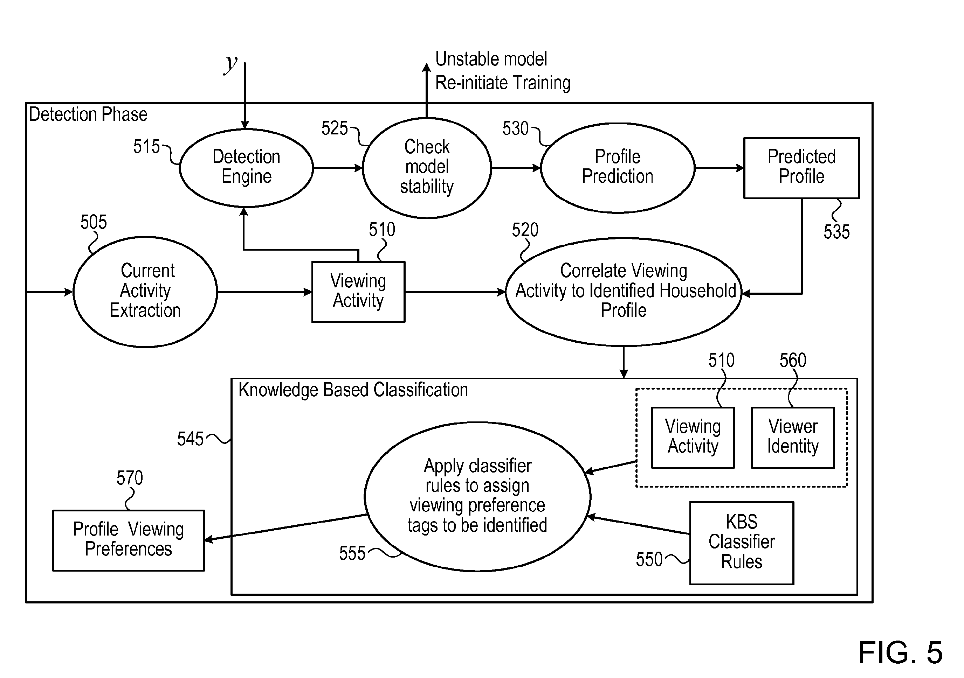

Reference is now made to Fig. 5, which is a data flow diagram of a method of detection in the system of Fig. 2. The device operated by the viewer to watch content is instrumented to generate a 'current activity extraction' 505 message (i.e. a message detailing the current viewing activity occurring on the device) and propagates the message to an end-point hosting the detection engine 515 (i.e. the viewing device sends the broadcast headend a report of what is currently being viewed). It is appreciated that in the discussion of the present invention, for ease of description the discussion focuses on "the device" of a user, in the singular. However, it is noted that each viewer may have more than one device on which content is viewed (e.g. a television connected to a set-top box or PVR, a smart phone, a tablet, a computer, etc.). Nevertheless, the processes described throughout this discussion as being operative at the broadcast headend are designed to detect user activity, regardless of whether an individual user is viewing content on a single device or a plurality of devices.

The viewing activity 510 is extracted from the current activity extraction 505 and fed to the detection engine 515, the account ID within the activity is used to locate the model which is result of machine-learning for the household, correlating profiles/cluster labels for the household 520.

The current viewing activity 510 is then 'fitted' to the appropriate cluster. The process of 'fitting' an 'unseen' data point (viewing activity) to the machine learnt model (depicted as input "y" from Fig. 4 into Fig. 5) involves the calculation of the shortest distance measure from the unseen data point to the centroid of the cluster.

The appropriate distance measure is selected from a variety of measures like Euclidean, cosine etc. Those of skill in the art will appreciated that Euclidean distance works quite well with numerical data. For categorical data a transformation is necessary to vector representation and scaling to unit size. By default it works well. For a rigorous selection technique of distance metric the ratio of inter-centroidal separation to intra-cluster variance can help in selecting the right distance metric among several options such as, for example, Euclidean, cosine, Manhattan etc. This must be done for a control training dataset where the number of clusters is known for validation. The cluster ID of the cluster whose centroid is nearest to the unseen data point is then assigned to the unseen data point thereby making the data point a member of that cluster. This completes the step that fits the unseen data point in the machine learnt model. That is to say, profile prediction 530 is thereby completed. After the profile prediction the model is evaluated for stability 525 using cluster analysis techniques like Silhouette Coefficient. If the model is unstable then the prediction is discarded and a new training cycle is started. If the model is stable then user profiles for each household can be predicted 530, and the profile prediction 535 is accepted.

To further amplify the step of evaluating the model for stability 525, new input data comes in as a vector, a distance measure like Euclidean is computed to centroid of each of the N clusters that are inside the 'machine-learning model' for the household, the cluster whose centroid is the shortest distance from input vector is chosen as the candidate cluster to which the input data point belongs. If the input data represents a viewing event and the cluster of membership is, by way of example, 'father' cluster it can inferred that the father has switched on the TV. After the Euclidean distance has been determined during the step of evaluating the model for stability 525, the Silhouette Coefficient is then computed, which indicates if the model is likely to be become unstable or not due to fitting the new data point. If state is likely to become unstable then the data point is not fitted but rather the model itself is discarded and a fresh machine learning cycle is initiated for that household due to its model being stale and invalid. If model is stable then user profiles for each household can be predicted 530, and the profile prediction 535 is accepted.

The established household and viewer identity 560 is coupled with the viewing activity 510 and fed as input into a KBS System 545. The KBS system 545 applies classifier rules to assign viewing preference tags 555, and takes as input rules 550 and viewing activity 510 along with viewer identity 560, resulting in a set of profile viewing preferences 570 to augment the correlating profiles.

By way of example, an exemplary rule is to determine whether the household contains a sports fan:

"Sports fan == true if (x) hours of sport watched in the last week"

The pre-processed guidebooks 370 (Fig. 3) are used to determine an acceptable threshold for (x) based upon ground truths in the audience measurement data 310 (Fig. 3).

In the absence of the present invention, the rule can only be processed against all household viewing activity, resulting in a decision to tag the household containing at least one anonymous sports fan.

The household decomposition invention facilitates the discovery of identity of individuals performing the viewing activity, therefore the rule can be processed against known individual profiles thus exposing the identity of the sports fan(s) in the household. The household inherits the sports fan tag if one or more individuals are assigned the tag by the rule.

As such, the knowledge based system described herein in the context of the present invention enriches the user profiles identified by the household decomposition by attributing viewing behavior tags to individuals as well as the household. The results of application of the present invention are profiles of individuals within the household, wherein the present invention applies tags which enrich the profiles.

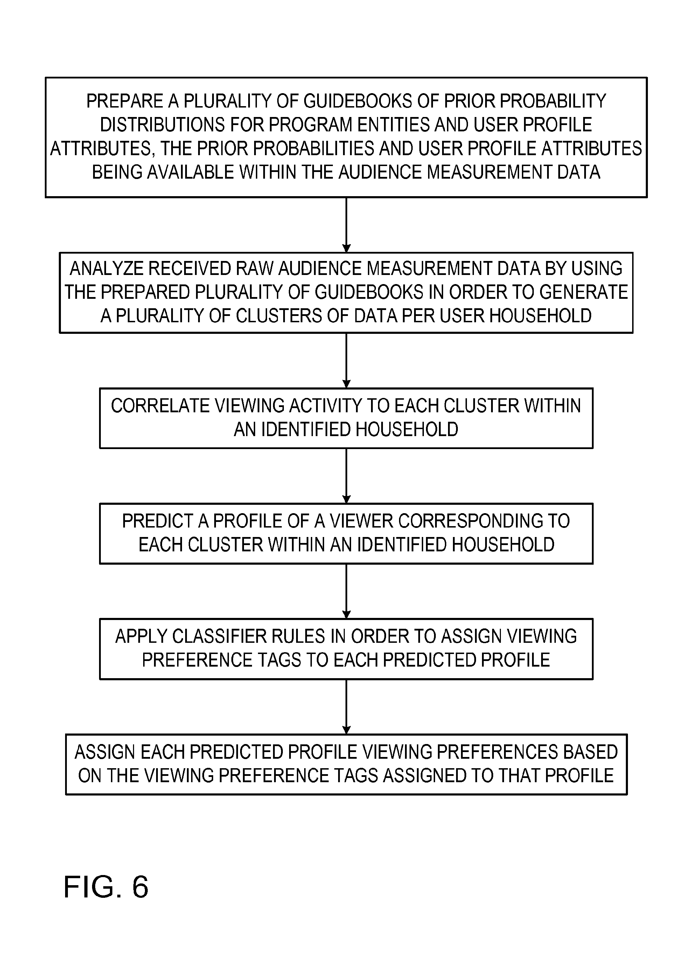

Reference is now made to Fig. 6, which is a flowchart diagram of a method of implementing the system of Fig. 2. Fig. 6 is believed to be self-explanatory in light of the above discussion.

The following example is a worked numerical example for a sample household with customer ID number 620428623 which is part of a dataset from an actual provider. This is a real household and so the data is not the output of a simulation but rather data from actual real viewers who are actual customers of an actual broadcaster. It is appreciated that the data as presented herein is anonymized, as is the broadcaster.

The data presented below represents viewing activities which are time-stamped events. The set of attributes for this data are the following:

1. TimeStamp - the time represented as seconds elapsed since epoch (i.e. Epoch time, also called UNIX time, is the number of seconds elapsed since 1st Jan 1970 and is used to represent date as a long integer data type.);
2. ChannelID - the live channel on which the content was viewed;

3. Episode - the episode of the program (i.e. content item) being viewed;

4. Genre - the genre of the program (i.e. content item) being viewed;

5. ContentISAN - the ID that uniquely identifies the TV Series from other TV Series. ISAN is a standard that creates identifiers which are unique;

6. ContentSeason - the season number for the TV Series of the content is a TV series. If there is no season number for the content, then the values is null;

7. TimeBin - the time of the day when the live content was viewed;

8. Day - the day of the week when the live content was viewed; and

9. ContentName - the content name.

Of the attributes mentioned in the above list of attributes, the following five attributes are relevant for Feature Extraction 420 (Fig. 4):

1. ChannelID - the live channel on which the content was viewed;

2. Genre - the genre of the program (i.e. content item) being viewed

3. TimeBin - the time of the day when the live content was viewed;

4. Day - the day of the week when the live content was viewed; and

5. ContentName - the content name.

During the step of feature extraction raw data attributes are converted into a feature vector representation. In general, the features can be either categorical or numerical. By way of example, numerical attributes would be quantifiable attributes, such as temperature (e.g. 35° C; 14° F, etc.) or duration (e.g. 3 minutes; 200 seconds, etc.) and categorical attributes would be qualitative attributes, such as climate (e.g. sunny, windy, rainy, overcast).

The dataset for customer ID number 620428623 is presented in Appendix A to the present disclosure. The being used for the feature extraction from the data in Appendix A are made of categorical attributes: ChannelID; Genre; TimeBin; Day; ContentName. It is also noted that these categorical attributes are all of String data type. The same data presented in Appendix A in tabular form is also presented in Appendix B in Java Script Object Notation (JSON). So, Appendix A is in a format which is convenient for humans to read, and Appendix B has the same information, formatted in a manner more easily readable by a computer. It is appreciated that although the data of Appendix A is presented, in Appendix B in a Java Script format, the data could have been presented in XML or in any other appropriate format.

The categorical data can be converted to feature vector format using the following rules:

1. Lexically sort the attribute names: for example:

ChannelID
ContentName,
Day,
Genre,
TimeBin

2. For each attribute collect a set of unique sorted attribute values

E.g., For Genre attribute for household ID 620428623, the set of unique values is:

| 1 | 000-002-000 |
|----|-------------|
| 2 | 000-003-000 |
| 3 | 000-007-000 |
| 4 | 000-008-001 |
| 5 | 000-008-023 |
| 6 | 000-008-054 |
| 7 | 000-009-000 |
| 8 | 000-010-000 |
| 9 | 000-011-000 |
| 10 | 000-012-000 |
| 11 | 000-013-000 |

(continued)

| 12 | 000-017-001 |
|----|-------------|
| 13 | 000-017-011 |
| 14 | 000-017-013 |
| 15 | 000-017-017 |
| 16 | 000-017-020 |
| 17 | 000-017-023 |
| 18 | 000-017-024 |

3. Let the size of the set of unique values be N from step (2). E.g., For this example the N for Genre attribute is 18

4. The raw dataset has 267 rows. For each row create a zero-initialized vector of size N=18.

E.g., The initial Genre vector for this household is: <0,0,0,0,0,0,0,0,0,0,0,0,0,0,0,0,0,0>

5. 'Turn on' the vector dimension to '1' from '0', whose position matches the values on the look-up list from step 2, above.

E.g., .The first 2 rows of the raw data (see Appendix A) contain the genres 000-013-000, 000-009-000.

The positions in the list from step (2) for these 2 genres are 11 and 7 respectively. Therefore the corresponding Genre vectors are: <0,0,0,0,0,0,0,0,0,0,1,0,0,0,0,0,0,0> and <0,0,0,0,0,0,1,0,0,0,0,0,0,0,0,0,0,0>

6. For each row of the raw data, repeat steps (2) to (5), above, for each of the attributes (ChannelID, ContentName, Day, Genre, TimeBin) and generate the vectors for each attribute.

7. Concatenate the attribute vectors in lexical order of the attribute names to produce the feature vectors. E.g., for the first row of the raw data if CHv1 represents the ChannelID vector, COv1 represents the ContentID vector, Dv1 represents the Day vector, Gv1 represents the Genre vector, Tv1 represents the TimeBin vector then the resultant feature vector that represents the first row of the raw data is: < CHv1, COv1 Dv1, Gv1, Tv1>

Reference is now made to Appendix C, which is a lexographically ordered listing of all of the unique values in Appendices A and B.

Reference is now made to Appendix which is a listing of the first five sample feature vectors of normalized unit length for the data of Appendices A and B.. Since the dimensionality of the feature vectors can be quite large only the first 5 feature vectors are provided as sample. The feature vectors are also normalized to be of unit length. There are currently 156 dimensions for the feature vectors for this particular example household ID **620428623.**

After the feature vectors are prepared as described above, Principal Component Analysis (PCA) is performed on the data (refer to steps 425 and 430 of Fig. 4). The features identified as relevant based on domain knowledge may not be independent. This is because there might be correlation between *ChannelID, ContentName, Day, Genre,* and *TimeBin.*

It is hard to determine which of the features is relevant to clearly distinguish clusters (individual patterns) in the data. But PCA can help in rank-ordering the components based on the amount of variance that is captured in the data. Therefore PCA is a good domain agnostic purely statistical tool for determining relevant features. Also, if the feature space is large running into thousands of dimensions then PCA can be used to filter out the components which are not relevant using a scree plot (as is known in the art). It has been empirically observed that the first 10 components in most cases captures about 95% of variance and usually this amount of variance is good enough for machine learning algorithms to do clustering on. The components after $10^{th}$ component could be truncated without any real impact on the accuracy.

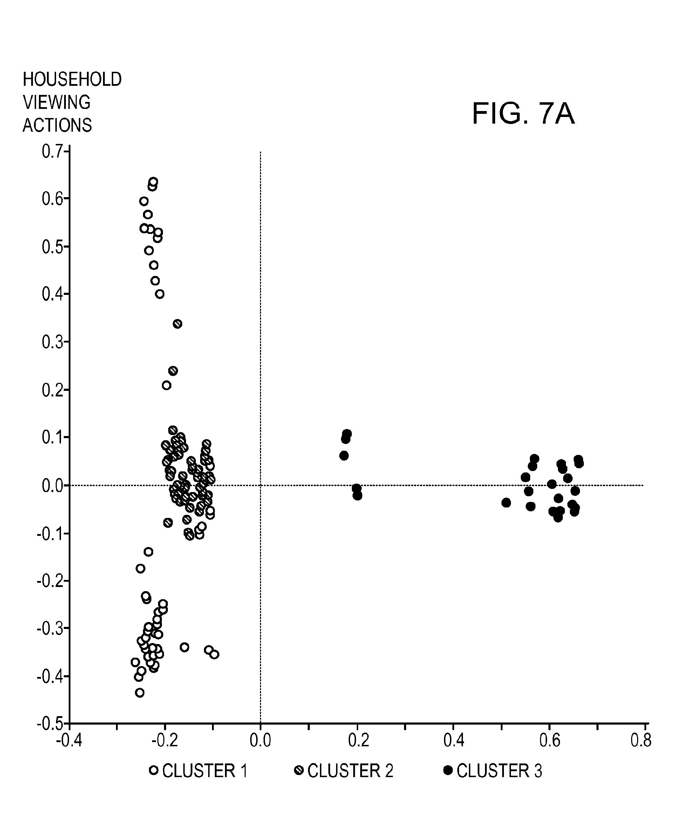

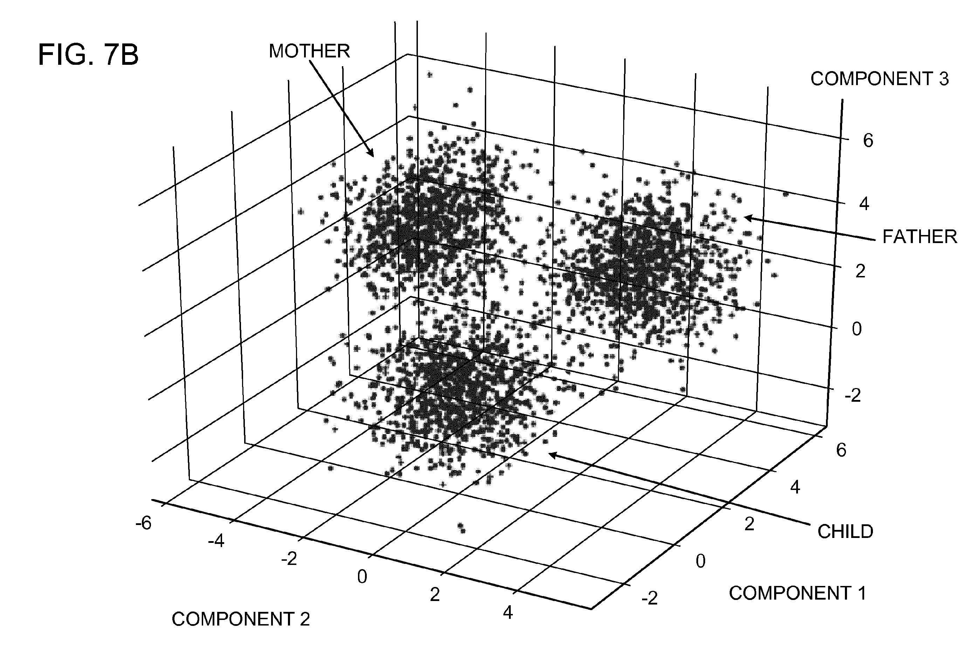

Higher dimensional data of more than 3 dimensions cannot easily be easily visualized. Also if the 3 dimensions in the data are not orthogonal to each other then it is hard to represent the data in the Cartesian coordinate system of X Y Z axes for visualization. One cannot represent the raw attributes like ChannelID, ContentName, Day, Genre and TimeBin as orthogonal dimensions. But once the PCA data has been extracted from these raw attributes then it is possible to represent the data in Cartesian coordinate system. An intrinsic property of PCA is that all components are orthogonal to each other. There the first 3 components can be mapped to the X, Y and Z axes of the Cartesian coordinate system and the result as a scatterplot can be visualized. Reference is now made to Figs. 7A and 7B, which are, respectively, a two-dimensional and a three-dimensional scatterplot of the data presented in Appendix A, after principal component analysis has been performed on the data for HouseholdID 620428623.

It is appreciated that although Fig. 7A shows clusters which, in two dimensions appear to be superimposed one on the other, in three dimensions, the clusters appear independent of each other, along the lines with the depiction of Fig. 7B.

Reference is now made to Appendix E, which captures the first five rows, by way of illustrating the above, of Appendices A and B (i.e. the input data) transformed from feature space to component space.

After the data has been clustered, cluster analysis is performed (refer to step 445 of Fig. 4). K-Means Clustering is a supervised clustering algorithm that could be very useful in determining the clusters in the data. The output of clustering is:

1. List of K cluster with their centroids where K is the input parameter passed to the k-means algorithm. If there are 156 dimensions in input vectors then each centroid is a 156-dimensional point.
2. The training data after tagging it with the applicable cluster label as determined by the algorithm

Reference is now made to Appendix F which is an exemplary Python language code routine for performing the clustering. This is just one embodiment of the invention. The implementation could be done using other languages and machine learning libraries as well.

As is known in the art, Cluster Analysis is the technique to find out the most stable configuration for clustering. It tries to answer "How many clusters are most stable for a given dataset?". In Fig. 5, the step of checking model stability 525 corresponds to this cluster analysis.

The cluster analysis techniques applied are known as Silhouette Coefficient (SC).

$$SC = (B-A) / \max(A,B)$$

Where:

- A is the distance from the case to the centroid of the cluster to which the case belongs;
- B is the minimal distance from the case to the centroid of every other cluster.

Distances may be calculated using Euclidean distances. The Silhouette Coefficient and its average range between -1, indicating a very poor model, and 1, indicating an excellent model.

Household ID 620428623 has 3 members, as was established during a phone survey by the source of the data during a telephone survey.

Appendix F provides a range of outputs returned for a test of possible numbers of clusters ranging from 2 through 9 (those skilled in the art will appreciate that in Python, the upper limit is not part of the loop). The output where k = 3 is a Silhouette Coefficient of 0.028. Of the values of the output ranging from k = 2 through k = 10, the output the value was closest to 1 when K was equal to 3. This indicates that the model for this household became stable when k was set to 3 (refer to step 525, Fig. 5). This matches the ground-truth and hence the accuracy of the model is good. But this experiment has to be completed for multiple households and the accuracy has to be calculated across a number of households.

Benchmarking is a technique to compute the goodness of a machine learning algorithm. For a binary problem of detecting if an image is that of an "X", by way of example, training data would consist of images and the ground-truth, which is the 'expected' value, would be known. The software provides a predicted value. The expected value is compared with the predicted value and extract the true positive, false positive, true negative and false negative metrics. These are then used to compute the *precision.* Table 1 illustrates this point by asking the question: Is this an image of an X.

TABLE 1

| Expected | Predicted |
|----------|-----------|
| X | YES (True Positive) |
| Z | YES (False Positive) |
| Y | No (True Negative) |
| X | No (False Negative) |

$$Precision = (number\ of\ true\ positives) / (number\ of\ true\ positives + false\ positives)$$

Similar benchmarking is performed for this example, and benchmarking is performed checking the precision of prediction for results, and compute the precision using the formula above.

Anything with a benchmark for precision above 80% is respectable. Anything above 90% is really quite valuable.

Most clustering algorithms are very inclusive, implying that all points in the training data are included in computing the cluster centers and for labeling the training data. But the data has outliers. Outliers are data whose values are out of a 'normal' range. In the PayTV domain data model this could represent an outlier behavior of a viewer. For example *'did a viewer view a content that he/she would normally not view or did a viewer view a content at a time when they normally would not view'.*

Fuzzy k-means clustering is one clustering algorithm that could be used for outlier detection. Here each point as denoted by D1, D2, D3, D4 in Table 2 is clustered but instead of a definite cluster membership there is a notion of fuzzy cluster membership. i.e., each point belongs to all clusters in varying degrees of belongingness.

TABLE 2

| Clusters | c1 | c2 | c3 |
|---|---|---|---|
| Point D1 | 0.1 | 0.3 | 0.6 |
| Point D2 | 0.8 | 0.2 | 0.0 |
| Point D2 | 0.1 | 0.1 | 0.8 |
| Point D4 | 0.3 | 0.3 | 0.3 |

The fuzziness represents a probability of belonging to a cluster (e.g. clusters c1, c2, and c3 in Table 2) and is the inverse of the ratio of the distance from the point to the centroids of the clusters. D1 D2 and D3 seem to have a clear membership in one particular cluster: D1 in cluster c3; D2 in cluster c1; and D3 in cluster c3. However, D4 has ambiguous belongingness. Such points which are borderline and ambiguous in terms of membership could be removed from the training data as outliers and the clustering algorithm could run on the reduced set for improved accuracy (see step 435 in Fig. 4).

In the present example, France's Mediametrie or UK's BARB audience measurement data has been used in order to compute the means and standard deviations for ages of viewers for every piece of content. If the audience measurement data is not available then a panel of 'experts' would be polled in order to provide the likely average age for viewership of the various content. It is appreciated that in the present example this has not occurred. The median of these panel's responses could be considered to be robust to extreme values. Appendix G is a list of s the sample means and standard deviations for the various content items in the present example.

The determination of means and standard deviations for each content item is repeated for gender and region of domicile. The determined means and standard deviations for the ages, genders and regions of domicile of the consumers of each content item is then used to compute the probability density function, $f_x(x)$, for each content.

$$f_x(x) = \frac{1}{\sigma\sqrt{2\pi}} e^{-\frac{(x-\mu)^2}{2\sigma^2}}$$

Where:

σ represents the standard deviation; and
μ represents the mean.

Once the probability density function is computed, it then is possible to compute the probabilities that each viewer will view a content item. These computed probabilities then constitute the 'guidebook' of prior probabilities that could then be applied in a Bayesian classifier to predict Age, Gender, Region etc. (see step 450 of Fig. 4, cluster profiles per household).

A maximum a-priori algorithm like Naive Bayes classifier is used to help in predicting the various demography profiles in this manner

Knowledge-based systems or expert systems are used to create and fire 'if-then' rules on the viewing data. The rules are written to fire based on thresh-holds on the aggregated viewing time spent on various genres, content entries and channels. A sample rule could be of the form:

```
If the most_viewed_channel == 'ESPN'
Then
Tag the user as 'ESPN-fan'
```

A plurality of such tags could be generated per household and per individual profile in the household. These tags serve as descriptive tags to describe the preferences of the household or individual profiles therein. The tags could be as generic or as specific as required in their focus. For instance, some rules might state that an individual is a 'Sports-Genre-Fan'. On the other hand, some tags could be very specific and state that a viewer is a 'Soccer-Sports-Fan' or even a 'Manchester-United-Fan'.

The KBS system has a 'staging' area and a 'live' area. The staging area is a mock area to simulate the effects of firing the rules on the real data. This is believed to be a good test bed. For instance the KBS system might indicate that a rule, such as the above rule, ended up tagging 10% of the population as ESPN fans. This tagging accounted for about 100,000 users. However, if this were the month of the Olympics most of the population would typically have a viewing behaviour which is skewed away from the normal towards a seasonal event. So one could adjust the thresholds on which the rule fires in such a manner, so that the desired result if obtained. For example, and without limiting the generality of the foregoing, ordinarily, about 1% of the population would be tagged as ESPN fans, instead of 10%.

Then the rules could go 'live'. By going 'live' the rules would fire and the consequence of the rules would be descriptive tags and these would be assigned to the individual profiles and households as described above.

It is appreciated that the system described herein will require storing of terabytes of data from, perhaps, a million households. Therefore, a cluster of commodity hardware servers will be required to provide storage as well as processing power for execution of the process described above.

It is appreciated that software components of the present invention may, if desired, be implemented in ROM (read only memory) form. The software components may, generally, be implemented in hardware, if desired, using conventional techniques. It is further appreciated that the software components may be instantiated, for example: as a computer program product or on a tangible medium. In some cases, it may be possible to instantiate the software components as a signal interpretable by an appropriate computer, although such an instantiation may be excluded in certain embodiments of the present invention.

It is appreciated that various features of the invention which are, for clarity, described in the contexts of separate embodiments may also be provided in combination in a single embodiment. Conversely, various features of the invention which are, for brevity, described in the context of a single embodiment may also be provided separately or in any suitable subcombination.

It will be appreciated by persons skilled in the art that the present invention is not limited by what has been particularly shown and described hereinabove. Rather the scope of the invention is defined by the appended claims and equivalents thereof:

## APPENDIX A

## AGGREGATED RAW DATA FOR CUSTOMER – HOUSEHOLDID

| S.No | TimeStamp | ChannelId | Episode | Genre | contentISAN | contentSeason | TimeBin | Day | contentName |
|---|---|---|---|---|---|---|---|---|---|
| 1 | 1377190800 | 30 | 11323415-2-19 | 000-013-000 | 11323415 | 11323415-2 | TIME_17_TO_18 | THU | 2900Happiness |
| 2 | 1377194400 | 1 | null | 000-009-000 | null | null | TIME_18_TO_19 | THU | Journal |
| 3 | 1377198000 | 107 | 4180756-1-11 | 000-013-000 | 4180756 | 4180756-1 | TIME_19_TO_20 | THU | DrHouse |
| 4 | 1377201600 | 33 | null | 000-017-023 | null | null | TIME_20_TO_21 | THU | CyborgConquest |
| 5 | 1377608400 | 1 | null | 000-017-013 | null | null | TIME_13_TO_14 | TUE | Laconvictiondemafille |
| 6 | 1377619200 | 12 | null | 000-002-000 | null | null | TIME_16_TO_17 | TUE | L'Iledesvrits3 |
| 7 | 1377622800 | 1 | null | 000-010-000 | null | null | TIME_17_TO_18 | TUE | Lejusteprix |
| 8 | 1377626400 | 1 | null | 000-009-000 | null | null | TIME_18_TO_19 | TUE | Journal |
| 9 | 1377630000 | 8 | null | 000-008-001 | null | null | TIME_19_TO_20 | TUE | Ultimevengeance |
| 10 | 1377673200 | 2 | null | 000-009-000 | null | null | TIME_07_TO_08 | WED | Mtodesplages |
| 11 | 1377676800 | 2 | null | 000-011-000 | null | null | TIME_08_TO_09 | WED | Lejourotoutabascul |
| 12 | 1377684000 | 1 | null | 000-010-000 | null | null | TIME_10_TO_11 | WED | Lesdouzecoupsdemidi |
| 13 | 1377687600 | 1 | null | 000-009-000 | null | null | TIME_11_TO_12 | WED | Journal |
| 14 | 1377694800 | 131 | 3241772-4-17 | 000-013-000 | 3241772 | 3241772-4 | TIME_13_TO_14 | WED | Demainlaune |
| 15 | 1377702000 | 12 | null | 000-002-000 | null | null | TIME_15_TO_16 | WED | Lemag |
| 16 | 1377705600 | 30 | null | 000-007-000 | 6479 | null | TIME_16_TO_17 | WED | TopModels |
| 17 | 1377709200 | 1 | null | 000-010-000 | null | null | TIME_17_TO_18 | WED | Lejusteprix |
| 18 | 1377712800 | 1 | null | 000-009-000 | null | null | TIME_18_TO_19 | WED | Journal |
| 19 | 1377716400 | 1 | 4125103-4-10 | 000-013-000 | 4125103 | 4125103-4 | TIME_19_TO_20 | WED | Espritscriminels |

| S.No | TimeStamp | ChannelId | Episode | Genre | contentISAN | contentSeason | TimeBin | Day | contentName |
|---|---|---|---|---|---|---|---|---|---|
| 20 | 1377720000 | 1 | 4125103-4-13 | 000-013-000 | 4125103 | 4125103-4 | TIME_20_TO_21 | WED | Espritscriminels |
| 21 | 1377766800 | 10 | null | 000-017-013 | null | null | TIME_09_TO_10 | THU | Lelitdudiable |
| 22 | 1377770400 | 1 | null | 000-010-000 | null | null | TIME_10_TO_11 | THU | Lesdouzecoupsdemidi |
| 23 | 1377774000 | 1 | null | 000-009-000 | null | null | TIME_11_TO_12 | THU | Journal |
| 24 | 1377781200 | 1 | null | 000-017-024 | null | null | TIME_13_TO_14 | THU | Seulecontretous |
| 25 | 1377784800 | 1 | null | 000-002-000 | null | null | TIME_14_TO_15 | THU | Quatremariagespourunelunedemiel |
| 26 | 1377795600 | 1 | null | 000-010-000 | null | null | TIME_17_TO_18 | THU | Lejusteprix |
| 27 | 1377799200 | 1 | null | 000-009-000 | null | null | TIME_18_TO_19 | THU | Journal |
| 28 | 1377806400 | 33 | null | 000-017-020 | null | null | TIME_20_TO_21 | THU | Lesailesdelaterreur |
| 29 | 1377846000 | 2 | null | 000-007-000 | 6473 | null | TIME_07_TO_08 | FRI | Desjoursetdesvies |
| 30 | 1377849600 | 2 | null | 000-011-000 | null | null | TIME_08_TO_09 | FRI | Lejourotoutabascul |
| 31 | 1377853200 | 2 | null | 000-013-000 | 6869799 | null | TIME_09_TO_10 | FRI | LaminuteduChat |
| 32 | 1377856800 | 1 | null | 000-010-000 | null | null | TIME_10_TO_11 | FRI | Lesdouzecoupsdemidi |
| 33 | 1377860400 | 1 | null | 000-009-000 | null | null | TIME_11_TO_12 | FRI | Journal |
| 34 | 1377864000 | 6 | null | 000-017-013 | null | null | TIME_12_TO_13 | FRI | Lepactedesnon-dits |
| 35 | 1377871200 | 1 | null | 000-002-000 | null | null | TIME_14_TO_15 | FRI | Quatremariagespourunelunedemiel |
| 36 | 1377882000 | 1 | null | 000-010-000 | null | null | TIME_17_TO_18 | FRI | Lejusteprix |
| 37 | 1377885600 | 1 | null | 000-009-000 | null | null | TIME_18_TO_19 | FRI | Journal |
| 38 | 1377896400 | 1 | null | 000-002-000 | null | null | TIME_21_TO_22 | FRI | SecretStory |

EP 2 945 113 A1

| S.No | TimeStamp | ChannelId | Episode | Genre | contentISAN | contentSeason | TimeBin | Day | contentName |
|---|---|---|---|---|---|---|---|---|---|
| 39 | 1377900000 | 1 | null | 000-002-000 | null | null | TIME_22_TO_23 | FRI | SecretStory |
| 40 | 1378022400 | 11 | null | 000-017-011 | null | null | TIME_08_TO_09 | SUN | Untransatpourhuit |
| 41 | 1378026000 | 1 | null | 000-011-000 | null | null | TIME_09_TO_10 | SUN | Tlfoot |
| 42 | 1378029600 | 1 | null | 000-010-000 | null | null | TIME_10_TO_11 | SUN | Lesdouzecoupsdemidi |
| 43 | 1378033200 | 1 | null | 000-009-000 | null | null | TIME_11_TO_12 | SUN | Journal |
| 44 | 1378054800 | 3 | null | 000-009-000 | null | null | TIME_17_TO_18 | SUN | 19/20 |
| 45 | 1378058400 | 1 | null | 000-009-000 | null | null | TIME_18_TO_19 | SUN | Journal |
| 46 | 1378062000 | 131 | null | 000-008-023 | null | null | TIME_19_TO_20 | SUN | Unevievole |
| 47 | 1378076400 | 1 | 7964610-6-4 | 000-013-000 | 7964610 | 7964610-6 | TIME_23_TO_24 | SUN | Dexter |
| 48 | 1378105200 | 2 | null | 000-011-000 | null | null | TIME_07_TO_08 | MON | Dansquelleta-gre |
| 49 | 1378112400 | 9 | null | 000-012-000 | null | null | TIME_09_TO_10 | MON | @vosclips |
| 50 | 1378116000 | 1 | null | 000-010-000 | null | null | TIME_10_TO_11 | MON | Lesdouzecoupsdemidi |
| 51 | 1378119600 | 1 | null | 000-009-000 | null | null | TIME_11_TO_12 | MON | Journal |
| 52 | 1378137600 | 1 | null | 000-002-000 | null | null | TIME_16_TO_17 | MON | SecretStory |
| 53 | 1378141200 | 1 | null | 000-010-000 | null | null | TIME_17_TO_18 | MON | Lejusteprix |
| 54 | 1378144800 | 1 | null | 000-009-000 | null | null | TIME_18_TO_19 | MON | Journal |
| 55 | 1378148400 | 1 | 5736315-9-18 | 000-013-000 | 5736315 | 5736315-9 | TIME_19_TO_20 | MON | Lesexperts |
| 56 | 1378152000 | 1 | 5736315-9-19 | 000-013-000 | 5736315 | 5736315-9 | TIME_20_TO_21 | MON | Lesexperts |
| 57 | 1378188000 | 2 | null | 000-011-000 | null | null | TIME_06_TO_07 | TUE | Tlmatin(suite) |
| 58 | 1378198800 | 1 | null | 000-013-000 | 10765454 | null | TIME_09_TO_10 | TUE | Petitssecretsentrevoisins |
| 59 | 1378202400 | 1 | null | 000-010-000 | null | null | TIME_10_TO_11 | TUE | Lesdouzecoupsdemidi |

| S.No | TimeStamp | ChannelId | Episode | Genre | contentISAN | contentSeason | TimeBin | Day | contentName |
|---|---|---|---|---|---|---|---|---|---|
| 60 | 1378206000 | 1 | null | 000-009-000 | null | null | TIME_11_TO_12 | TUE | Journal |
| 61 | 1378213200 | 1 | null | 000-017-013 | null | null | TIME_13_TO_14 | TUE | Scandaleaupensionnat |
| 62 | 1378224000 | 30 | null | 000-007-000 | 6479 | null | TIME_16_TO_17 | TUE | TopModels |
| 63 | 1378227600 | 1 | null | 000-010-000 | null | null | TIME_17_TO_18 | TUE | Lejusteprix |
| 64 | 1378231200 | 1 | null | 000-009-000 | null | null | TIME_18_TO_19 | TUE | Journal |
| 65 | 1378242000 | 12 | null | 000-017-024 | null | null | TIME_21_TO_22 | TUE | SexCrimes2 |
| 66 | 1378274400 | 2 | null | 000-009-000 | null | null | TIME_06_TO_07 | WED | Journal |
| 67 | 1378278000 | 2 | null | 000-007-000 | 6479 | null | TIME_07_TO_08 | WED | TopModels |
| 68 | 1378285200 | 10 | 3849028-24-3 | 000-013-000 | 3849028 | 3849028-24 | TIME_09_TO_10 | WED | AlerteCobra |
| 69 | 1378288800 | 1 | null | 000-010-000 | null | null | TIME_10_TO_11 | WED | Lesdouzecoupsdemidi |
| 70 | 1378292400 | 1 | null | 000-009-000 | null | null | TIME_11_TO_12 | WED | Journal |
| 71 | 1378317600 | 1 | null | 000-009-000 | null | null | TIME_18_TO_19 | WED | Journal |
| 72 | 1378324800 | 1 | 4125103-4-23 | 000-013-000 | 4125103 | 4125103-4 | TIME_20_TO_21 | WED | Espritscriminels |
| 73 | 1378328400 | 1 | 3552248-6-3 | 000-013-000 | 3552248 | 3552248-6 | TIME_21_TO_22 | WED | DrHouse |
| 74 | 1378332000 | 1 | 3552248-6-4 | 000-013-000 | 3552248 | 3552248-6 | TIME_22_TO_23 | WED | DrHouse |
| 75 | 1378357200 | 2 | null | 000-011-000 | null | null | TIME_05_TO_06 | THU | TImatin(suite) |
| 76 | 1378360800 | 2 | null | 000-009-000 | null | null | TIME_06_TO_07 | THU | Journal |
| 77 | 1378375200 | 1 | null | 000-010-000 | null | null | TIME_10_TO_11 | THU | Lesdouzecoupsdemidi |
| 78 | 1378378800 | 1 | null | 000-009-000 | null | null | TIME_11_TO_12 | THU | Journal |
| 79 | 1378386000 | 1 | null | 000-017-013 | null | null | TIME_13_TO_14 | THU | Ladisparitiondemonenfant |
| 80 | 1378396800 | 30 | null | 000-007-000 | 6479 | null | TIME_16_TO_17 | THU | TopModels |

| S.No | TimeStamp | ChannelId | Episode | Genre | contentISAN | contentSeason | TimeBin | Day | contentName |
|---|---|---|---|---|---|---|---|---|---|
| 81 | 1378400400 | 1 | null | 000-010-000 | null | null | TIME_17_TO_18 | THU | Lejusteprix |
| 82 | 1378404000 | 1 | null | 000-009-000 | null | null | TIME_18_TO_19 | THU | Journal |
| 83 | 1378414800 | 107 | 4180756-1-21 | 000-013-000 | 4180756 | 4180756-1 | TIME_21_TO_22 | THU | DrHouse |
| 84 | 1378447200 | 2 | null | 000-009-000 | null | null | TIME_06_TO_07 | FRI | Journal |
| 85 | 1378450800 | 2 | null | 000-011-000 | null | null | TIME_07_TO_08 | FRI | Dansquelleta-gre |
| 86 | 1378454400 | 2 | null | 000-011-000 | null | null | TIME_08_TO_09 | FRI | C'estauprogramme |
| 87 | 1378458000 | 10 | 3849028-24-5 | 000-013-000 | 3849028 | 3849028-24 | TIME_09_TO_10 | FRI | AlerteCobra |
| 88 | 1378461600 | 1 | null | 000-010-000 | null | null | TIME_10_TO_11 | FRI | Lesdouzecoupsdemidi |
| 89 | 1378465200 | 1 | null | 000-009-000 | null | null | TIME_11_TO_12 | FRI | Journal |
| 90 | 1378479600 | 131 | 8452390-1-6 | 000-013-000 | 8452390 | 8452390-1 | TIME_15_TO_16 | FRI | Rescueunitspciale |
| 91 | 1378483200 | 30 | null | 000-007-000 | 6479 | null | TIME_16_TO_17 | FRI | TopModels |
| 92 | 1378486800 | 4 | null | 000-002-000 | null | null | TIME_17_TO_18 | FRI | Legrandjournal |
| 93 | 1378501200 | 1 | null | 000-002-000 | null | null | TIME_21_TO_22 | FRI | SecretStory |
| 94 | 1378504800 | 1 | null | 000-002-000 | null | null | TIME_22_TO_23 | FRI | SecretStory |
| 95 | 1378533600 | 7 | 9941477-1-1 | 000-013-000 | 9941477 | 9941477-1 | TIME_06_TO_07 | SAT | Lepacte |
| 96 | 1378562400 | 11 | null | 000-011-000 | null | null | TIME_14_TO_15 | SAT | Tousdiffrents |
| 97 | 1378569600 | 30 | 5760711-null- | 000-013-000 | 5760711 | null | TIME_16_TO_17 | SAT | 112Unitd'urgence |
| 98 | 1378573200 | 1 | null | 000-011-000 | null | null | TIME_17_TO_18 | SAT | 50mnInside |
| 99 | 1378576800 | 1 | null | 000-009-000 | null | null | TIME_18_TO_19 | SAT | Journal |
| 100 | 1378580400 | 18 | null | 000-002-000 | null | null | TIME_19_TO_20 | SAT | FortBoyard |
| 101 | 1378584000 | 18 | null | 000-002-000 | null | null | TIME_20_TO_21 | SAT | FortBoyard |

| S.No | TimeStamp | ChannelId | Episode | Genre | contentISAN | contentSeason | TimeBin | Day | contentName |
|------|-----------|-----------|---------|-------|-------------|---------------|---------|-----|-------------|
| 102 | 1378591200 | 1 | 4186649-4-15 | 000-013-000 | 4186649 | 4186649-4 | TIME_22_TO_23 | SAT | Lesexperts |
| 103 | 1378594800 | 1 | 4186649-4-16 | 000-013-000 | 4186649 | 4186649-4 | TIME_23_TO_24 | SAT | Lesexperts |
| 104 | 1378598400 | 11 | null | 000-011-000 | null | null | TIME_00_TO_01 | SUN | Catchamricain |
| 105 | 1378602000 | 11 | null | 000-011-000 | null | null | TIME_01_TO_02 | SUN | Catchamricain |
| 106 | 1378641600 | 1 | 3900137-4-8 | 000-013-000 | 3900137 | 3900137-4 | TIME_12_TO_13 | SUN | DrHouse |
| 107 | 1378645200 | 1 | 3900137-4-9 | 000-013-000 | 3900137 | 3900137-4 | TIME_13_TO_14 | SUN | DrHouse |
| 108 | 1378659600 | 1 | null | 000-011-000 | null | null | TIME_17_TO_18 | SUN | Lojet'emmnerai |
| 109 | 1378663200 | 1 | null | 000-009-000 | null | null | TIME_18_TO_19 | SUN | Journal |
| 110 | 1378666800 | 1 | null | 000-008-054 | null | null | TIME_19_TO_20 | SUN | Djvu |
| 111 | 1378670400 | 12 | null | 000-008-054 | null | null | TIME_20_TO_21 | SUN | Apparences |
| 112 | 1378674000 | 1 | null | 000-008-054 | null | null | TIME_21_TO_22 | SUN | Djvu |
| 113 | 1378706400 | 2 | null | 000-011-000 | null | null | TIME_06_TO_07 | MON | Tlmatin(suite) |
| 114 | 1378724400 | 1 | null | 000-009-000 | null | null | TIME_11_TO_12 | MON | Journal |
| 115 | 1378731600 | 1 | null | 000-017-001 | null | null | TIME_13_TO_14 | MON | Rendez-moimafille |
| 116 | 1378738800 | 31 | 5040745-3-16 | 000-013-000 | 5040745 | 5040745-3 | TIME_15_TO_16 | MON | Drlesdedames |
| 117 | 1378742400 | 30 | null | 000-007-000 | 6479 | null | TIME_16_TO_17 | MON | TopModels |
| 118 | 1378746000 | 9 | 11456947-5-11 | 000-013-000 | 11456947 | 11456947-5 | TIME_17_TO_18 | MON | Lesch'tisHollywood |
| 119 | 1378749600 | 1 | null | 000-009-000 | null | null | TIME_18_TO_19 | MON | Journal |
| 120 | 1378753200 | 1 | 7988199-10-8 | 000-013-000 | 7988199 | 7988199-10 | TIME_19_TO_20 | MON | Lesexperts |
| 121 | 1378756800 | 1 | 5736315-9-20 | 000-013-000 | 5736315 | 5736315-9 | TIME_20_TO_21 | MON | Lesexperts |
| 122 | 1378760400 | 1 | 1074126-6-9 | 000-013-000 | 1074126 | 1074126-6 | TIME_21_TO_22 | MON | Lesexperts |

| S.No | TimeStamp | ChannelId | Episode | Genre | contentISAN | contentSeason | TimeBin | Day | contentName |
|---|---|---|---|---|---|---|---|---|---|
| 123 | 1378789200 | 2 | null | 000-011-000 | null | null | TIME_05_TO_06 | TUE | Tlmatin(suite) |
| 124 | 1378792800 | 2 | null | 000-009-000 | null | null | TIME_06_TO_07 | TUE | Journal |
| 125 | 1378796400 | 2 | null | 000-011-000 | null | null | TIME_07_TO_08 | TUE | Dansquelleta-gre |
| 126 | 1378800000 | 2 | null | 000-011-000 | null | null | TIME_08_TO_09 | TUE | C'estauprogramme |
| 127 | 1378803600 | 1 | null | 000-013-000 | 10765454 | null | TIME_09_TO_10 | TUE | Petitssecretsentrevoisins |
| 128 | 1378807200 | 1 | null | 000-010-000 | null | null | TIME_10_TO_11 | TUE | Lesdouzecoupsdemidi |
| 129 | 1378810800 | 1 | null | 000-009-000 | null | null | TIME_11_TO_12 | TUE | Journal |
| 130 | 1378818000 | 1 | null | 000-017-013 | null | null | TIME_13_TO_14 | TUE | Unenfantvendre |
| 131 | 1378825200 | 12 | null | 000-002-000 | null | null | TIME_15_TO_16 | TUE | Lemag |
| 132 | 1378828800 | 30 | null | 000-007-000 | 6479 | null | TIME_16_TO_17 | TUE | TopModels |
| 133 | 1378836000 | 1 | null | 000-009-000 | null | null | TIME_18_TO_19 | TUE | Journal |
| 134 | 1378875600 | 1 | null | 000-011-000 | null | null | TIME_05_TO_06 | WED | TFou |
| 135 | 1378882800 | 2 | null | 000-011-000 | null | null | TIME_07_TO_08 | WED | Dansquelleta-gre |
| 136 | 1378886400 | 10 | null | 000-017-024 | null | null | TIME_08_TO_09 | WED | Crimepassionnel |
| 137 | 1378890000 | 1 | null | 000-013-000 | 10765454 | null | TIME_09_TO_10 | WED | Petitssecretsentrevoisins |
| 138 | 1378893600 | 1 | null | 000-010-000 | null | null | TIME_10_TO_11 | WED | Lesdouzecoupsdemidi |
| 139 | 1378897200 | 1 | null | 000-009-000 | null | null | TIME_11_TO_12 | WED | Journal |
| 140 | 1378904400 | 1 | null | 000-017-011 | null | null | TIME_13_TO_14 | WED | Josphine,angegardien |
| 141 | 1378908000 | 12 | null | 000-002-000 | null | null | TIME_14_TO_15 | WED | L'ledesvrits3 |
| 142 | 1378911600 | 12 | null | 000-002-000 | null | null | TIME_15_TO_16 | WED | Lemag |
| 143 | 1378915200 | 30 | null | 000-007-000 | 6479 | null | TIME_16_TO_17 | WED | TopModels |

| S.No | TimeStamp | ChannelId | Episode | Genre | contentISAN | contentSeason | TimeBin | Day | contentName |
|---|---|---|---|---|---|---|---|---|---|
| 144 | 1378918800 | 1 | null | 000-010-000 | null | null | TIME_17_TO_18 | WED | Lejusteprix |
| 145 | 1378922400 | 1 | null | 000-009-000 | null | null | TIME_18_TO_19 | WED | Journal |
| 146 | 1378926000 | 1 | 10617206-8-2 | 000-013-000 | 10617206 | 10617206-8 | TIME_19_TO_20 | WED | Espritscriminels |
| 147 | 1378929600 | 1 | 4125103-4-18 | 000-013-000 | 4125103 | 4125103-4 | TIME_20_TO_21 | WED | Espritscriminels |
| 148 | 1378962000 | 2 | null | 000-011-000 | null | null | TIME_05_TO_06 | THU | Tlmatin(suite) |
| 149 | 1378965600 | 2 | null | 000-009-000 | null | null | TIME_06_TO_07 | THU | Journal |
| 150 | 1378976400 | 1 | null | 000-013-000 | 10765454 | null | TIME_09_TO_10 | THU | Petitssecretsentrevoisins |
| 151 | 1378980000 | 1 | null | 000-010-000 | null | null | TIME_10_TO_11 | THU | Lesdouzecoupsdemidi |
| 152 | 1378983600 | 1 | null | 000-009-000 | null | null | TIME_11_TO_12 | THU | Journal |
| 153 | 1378990800 | 1 | null | 000-017-024 | null | null | TIME_13_TO_14 | THU | Intimeconviction |
| 154 | 1378998000 | 9 | 11456947-5-12 | 000-013-000 | 11456947 | 11456947-5 | TIME_15_TO_16 | THU | Lesch'tisHollywood |
| 155 | 1379001600 | 30 | null | 000-007-000 | 6479 | null | TIME_16_TO_17 | THU | TopModels |
| 156 | 1379005200 | 1 | null | 000-010-000 | null | null | TIME_17_TO_18 | THU | Lejusteprix |
| 157 | 1379008800 | 1 | null | 000-009-000 | null | null | TIME_18_TO_19 | THU | Journal |
| 158 | 1379019600 | 19 | null | 000-017-013 | null | null | TIME_21_TO_22 | THU | L'empiredutigre |
| 159 | 1379023200 | 19 | null | 000-002-000 | null | null | TIME_22_TO_23 | THU | JeuxdelaFrancophonie |
| 160 | 1379026800 | 19 | 11450967-3-11 | 000-013-000 | 11450967 | 11450967-3 | TIME_23_TO_24 | THU | Lost |
| 161 | 1379030400 | 19 | null | 000-003-000 | null | null | TIME_00_TO_01 | FRI | Vuduciel |
| 162 | 1379059200 | 1 | null | 000-013-000 | 10765454 | null | TIME_08_TO_09 | FRI | Petitssecretsentrevoisins |
| 163 | 1379066400 | 1 | null | 000-010-000 | null | null | TIME_10_TO_11 | FRI | Lesdouzecoupsdemidi |
| 164 | 1379070000 | 1 | null | 000-009-000 | null | null | TIME_11_TO_12 | FRI | Journal |

| S.No | TimeStamp | ChannelId | Episode | Genre | contentISAN | contentSeason | TimeBin | Day | contentName |
|---|---|---|---|---|---|---|---|---|---|
| 165 | 1379091600 | 1 | null | 000-010-000 | null | null | TIME_17_TO_18 | FRI | Lejusteprix |
| 166 | 1379095200 | 1 | null | 000-009-000 | null | null | TIME_18_TO_19 | FRI | Journal |
| 167 | 1379098800 | 113 | 359447-5-7 | 000-013-000 | 359447 | 359447-5 | TIME_19_TO_20 | FRI | That'70sShow |
| 168 | 1379102400 | 1 | null | 000-002-000 | null | null | TIME_20_TO_21 | FRI | TheBest,lemeilleurartiste |
| 169 | 1379113200 | 1 | null | 000-002-000 | null | null | TIME_23_TO_24 | FRI | SecretStory |
| 170 | 1379138400 | 2 | null | 000-011-000 | null | null | TIME_06_TO_07 | SAT | Tlmatin |
| 171 | 1379152800 | 3 | null | 000-009-000 | null | null | TIME_10_TO_11 | SAT | 12/13 |
| 172 | 1379156400 | 1 | null | 000-009-000 | null | null | TIME_11_TO_12 | SAT | Journal |
| 173 | 1379167200 | 14 | 4512477-4-6 | 000-013-000 | 4512477 | 4512477-4 | TIME_14_TO_15 | SAT | FBI |
| 174 | 1379178000 | 10 | 10282018-4-21 | 000-013-000 | 10282018 | 10282018-4 | TIME_17_TO_18 | SAT | Lesmystresdel'amour |
| 175 | 1379181600 | 1 | null | 000-009-000 | null | null | TIME_18_TO_19 | SAT | Journal |
| 176 | 1379188800 | 1 | null | 000-002-000 | null | null | TIME_20_TO_21 | SAT | CesoirtoutestpermisavecArthur |
| 177 | 1379235600 | 603 | null | 000-013-000 | 8523164 | null | TIME_09_TO_10 | SUN | Mreetfille |
| 178 | 1379239200 | 603 | 7556722-1-20 | 000-013-000 | 7556722 | 7556722-1 | TIME_10_TO_11 | SUN | Jessie |
| 179 | 1379242800 | 603 | 9077549-1-2 | 000-013-000 | 9077549 | 9077549-1 | TIME_11_TO_12 | SUN | Georgiadanstoussestats |
| 180 | 1379246400 | 1 | 3900137-4-10 | 000-013-000 | 3900137 | 3900137-4 | TIME_12_TO_13 | SUN | DrHouse |
| 181 | 1379278800 | 1 | 4837483-3-18 | 000-013-000 | 4837483 | 4837483-3 | TIME_21_TO_22 | SUN | Lesexperts |
| 182 | 1379307600 | 2 | null | 000-011-000 | null | null | TIME_05_TO_06 | MON | Tlmatin(suite) |
| 183 | 1379311200 | 2 | null | 000-009-000 | null | null | TIME_06_TO_07 | MON | Journal |
| 184 | 1379314800 | 2 | null | 000-011-000 | null | null | TIME_07_TO_08 | MON | Dansquelleta-gre |
| 185 | 1379318400 | 2 | null | 000-011-000 | null | null | TIME_08_TO_09 | MON | C'estauprogramme |

| S.No | TimeStamp | ChannelId | Episode | Genre | contentISAN | contentSeason | TimeBin | Day | contentName |
|---|---|---|---|---|---|---|---|---|---|
| 186 | 1379336400 | 1 | null | 000-017-017 | null | null | TIME_13_TO_14 | MON | L'espritd'uneautre |
| 187 | 1379347200 | 30 | null | 000-007-000 | 6479 | null | TIME_16_TO_17 | MON | TopModels |
| 188 | 1379350800 | 1 | null | 000-010-000 | null | null | TIME_17_TO_18 | MON | Lejusteprix |
| 189 | 1379354400 | 1 | null | 000-009-000 | null | null | TIME_18_TO_19 | MON | Journal |
| 190 | 1379358000 | 1 | 5736315-9-16 | 000-013-000 | 5736315 | 5736315-9 | TIME_19_TO_20 | MON | Lesexperts |
| 191 | 1379361600 | 1 | 5736315-9-2 | 000-013-000 | 5736315 | 5736315-9 | TIME_20_TO_21 | MON | Lesexperts |
| 192 | 1379394000 | 2 | null | 000-011-000 | null | null | TIME_05_TO_06 | TUE | Tlmatin(suite) |
| 193 | 1379397600 | 2 | null | 000-009-000 | null | null | TIME_06_TO_07 | TUE | Journal |
| 194 | 1379408400 | 1 | null | 000-002-000 | null | null | TIME_09_TO_10 | TUE | Legrand8 |
| 195 | 1379419200 | 107 | 5053179-3-10 | 000-013-000 | 5053179 | 5053179-3 | TIME_12_TO_13 | TUE | NewYork911 |
| 196 | 1379422800 | 6 | null | 000-011-000 | null | null | TIME_13_TO_14 | TUE | All,docteurs! |
| 197 | 1379430000 | 12 | null | 000-002-000 | null | null | TIME_15_TO_16 | TUE | Lemag |
| 198 | 1379484000 | 2 | null | 000-011-000 | null | null | TIME_06_TO_07 | WED | Tlmatin(suite) |
| 199 | 1379487600 | 2 | null | 000-011-000 | null | null | TIME_07_TO_08 | WED | Dansquelleta-gre |
| 200 | 1379491200 | 2 | null | 000-009-000 | null | null | TIME_08_TO_09 | WED | Mtooutremer |
| 201 | 1379494800 | 2 | null | 000-010-000 | null | null | TIME_09_TO_10 | WED | Motus |
| 202 | 1379512800 | 12 | null | 000-002-000 | null | null | TIME_14_TO_15 | WED | L'ledesvrits3 |
| 203 | 1379516400 | 12 | null | 000-002-000 | null | null | TIME_15_TO_16 | WED | Lemag |
| 204 | 1379566800 | 2 | null | 000-011-000 | null | null | TIME_05_TO_06 | THU | Tlmatin(suite) |
| 205 | 1379570400 | 2 | null | 000-009-000 | null | null | TIME_06_TO_07 | THU | Journal |
| 206 | 1379574000 | 2 | null | 000-011-000 | null | null | TIME_07_TO_08 | THU | Dansquelleta-gre |

EP 2 945 113 A1

| S.No | TimeStamp | ChannelId | Episode | Genre | contentISAN | contentSeason | TimeBin | Day | contentName |
|------|-----------|-----------|---------|-------|-------------|---------------|---------|-----|-------------|
| 207 | 1379577600 | 2 | null | 000-011-000 | null | null | TIME_08_TO_09 | THU | C'estauprogramme |
| 208 | 1379660400 | 2 | null | 000-007-000 | 6473 | null | TIME_07_TO_08 | FRI | Desjoursetdesvies |
| 209 | 1379664000 | 1 | null | 000-013-000 | 10765454 | null | TIME_08_TO_09 | FRI | Petitssecretsentrevoisins |
| 210 | 1379667600 | 1 | null | 000-013-000 | 10765454 | null | TIME_09_TO_10 | FRI | Petitssecretsentrevoisins |
| 211 | 1379671200 | 1 | null | 000-010-000 | null | null | TIME_10_TO_11 | FRI | Lesdouzecoupsdemidi |
| 212 | 1379674800 | 1 | null | 000-009-000 | null | null | TIME_11_TO_12 | FRI | Journal |
| 213 | 1379696400 | 1 | null | 000-010-000 | null | null | TIME_17_TO_18 | FRI | Unefamilleenor |
| 214 | 1379700000 | 1 | null | 000-009-000 | null | null | TIME_18_TO_19 | FRI | Journal |
| 215 | 1379707200 | 18 | null | 000-017-013 | null | null | TIME_20_TO_21 | FRI | Uncoeurgagnant |
| 216 | 1379710800 | 18 | 3769600-3-5 | 000-013-000 | 3769600 | 3769600-3 | TIME_21_TO_22 | FRI | Heartland |
| 217 | 1379761200 | 14 | 5772779-3-9 | 000-013-000 | 5772779 | 5772779-3 | TIME_11_TO_12 | SAT | DoctorWho |
| 218 | 1379786400 | 1 | null | 000-009-000 | null | null | TIME_18_TO_19 | SAT | Journal |
| 219 | 1379797200 | 1 | 4186649-4-21 | 000-013-000 | 4186649 | 4186649-4 | TIME_21_TO_22 | SAT | Lesexperts |
| 220 | 1379844000 | 1 | null | 000-010-000 | null | null | TIME_10_TO_11 | SUN | Lesdouzecoupsdemidi |
| 221 | 1379847600 | 1 | null | 000-009-000 | null | null | TIME_11_TO_12 | SUN | Journal |
| 222 | 1379858400 | 13 | null | 000-011-000 | null | null | TIME_14_TO_15 | SUN | Com'enpolitique |
| 223 | 1379865600 | 133 | null | 000-011-000 | null | null | TIME_16_TO_17 | SUN | Sanstabou |
| 224 | 1379869200 | 12 | null | 000-002-000 | null | null | TIME_17_TO_18 | SUN | L'ledesvrits3 |
| 225 | 1379872800 | 1 | null | 000-009-000 | null | null | TIME_18_TO_19 | SUN | Journal |
| 226 | 1379883600 | 1 | 4837483-3-20 | 000-013-000 | 4837483 | 4837483-3 | TIME_21_TO_22 | SUN | Lesexperts |
| 227 | 1379912400 | 2 | null | 000-009-000 | null | null | TIME_05_TO_06 | MON | Journal |

| S.No | TimeStamp | ChannelId | Episode | Genre | contentISAN | contentSeason | TimeBin | Day | contentName |
|---|---|---|---|---|---|---|---|---|---|
| 228 | 1379916000 | 2 | null | 000-009-000 | null | null | TIME_06_TO_07 | MON | Journal |
| 229 | 1379919600 | 2 | null | 000-011-000 | null | null | TIME_07_TO_08 | MON | Dansquelleta-gre |
| 230 | 1379923200 | 2 | null | 000-011-000 | null | null | TIME_08_TO_09 | MON | C'estauprogramme |
| 231 | 1379926800 | 1 | null | 000-013-000 | 10765454 | null | TIME_09_TO_10 | MON | Petitssecretsentrevoisins |
| 232 | 1379930400 | 1 | null | 000-010-000 | null | null | TIME_10_TO_11 | MON | Lesdouzecoupsdemidi |
| 233 | 1379934000 | 1 | null | 000-009-000 | null | null | TIME_11_TO_12 | MON | Journal |
| 234 | 1379937600 | 1 | null | 000-017-024 | null | null | TIME_12_TO_13 | MON | Voleused'enfant |
| 235 | 1379944800 | 9 | 11456947-5-18 | 000-013-000 | 11456947 | 11456947-5 | TIME_14_TO_15 | MON | Lesch'tisHollywood |
| 236 | 1379948400 | 12 | null | 000-002-000 | null | null | TIME_15_TO_16 | MON | Lemag |
| 237 | 1379955600 | 1 | null | 000-010-000 | null | null | TIME_17_TO_18 | MON | Lejusteprix |
| 238 | 1379959200 | 1 | null | 000-009-000 | null | null | TIME_18_TO_19 | MON | Journal |
| 239 | 1379998800 | 2 | null | 000-011-000 | null | null | TIME_05_TO_06 | TUE | Tlmatin(suite) |
| 240 | 1380002400 | 2 | null | 000-009-000 | null | null | TIME_06_TO_07 | TUE | Journal |
| 241 | 1380006000 | 2 | null | 000-011-000 | null | null | TIME_07_TO_08 | TUE | Dansquelleta-gre |
| 242 | 1380016800 | 1 | null | 000-011-000 | null | null | TIME_10_TO_11 | TUE | L'affichedujour |
| 243 | 1380020400 | 1 | null | 000-009-000 | null | null | TIME_11_TO_12 | TUE | Journal |
| 244 | 1380031200 | 12 | null | 000-002-000 | null | null | TIME_14_TO_15 | TUE | L'ledesvrits3 |
| 245 | 1380034800 | 12 | null | 000-002-000 | null | null | TIME_15_TO_16 | TUE | L'ledesvrits3 |
| 246 | 1380038400 | 1 | null | 000-010-000 | null | null | TIME_16_TO_17 | TUE | Unefamilleenor |
| 247 | 1380042000 | 1 | null | 000-010-000 | null | null | TIME_17_TO_18 | TUE | Lejusteprix |
| 248 | 1380045600 | 1 | null | 000-009-000 | null | null | TIME_18_TO_19 | TUE | Journal |

EP 2 945 113 A1

| S.No | TimeStamp | ChannelId | Episode | Genre | contentISAN | contentSeason | TimeBin | Day | contentName |
|---|---|---|---|---|---|---|---|---|---|
| 249 | 1380088800 | 2 | null | 000-009-000 | null | null | TIME_06_TO_07 | WED | Journal |
| 250 | 1380096000 | 1 | null | 000-011-000 | null | null | TIME_08_TO_09 | WED | TFou |
| 251 | 1380099600 | 2 | null | 000-010-000 | null | null | TIME_09_TO_10 | WED | Motus |
| 252 | 1380103200 | 1 | null | 000-010-000 | null | null | TIME_10_TO_11 | WED | Lesdouzecoupsdemidi |
| 253 | 1380106800 | 1 | null | 000-009-000 | null | null | TIME_11_TO_12 | WED | Journal |
| 254 | 1380121200 | 12 | null | 000-002-000 | null | null | TIME_15_TO_16 | WED | L'ledesvrits3 |
| 255 | 1380128400 | 3 | null | 000-009-000 | null | null | TIME_17_TO_18 | WED | 19/20 |
| 256 | 1380132000 | 1 | null | 000-009-000 | null | null | TIME_18_TO_19 | WED | Journal |
| 257 | 1380135600 | 1 | 3305860-5-14 | 000-013-000 | 3305860 | 3305860-5 | TIME_19_TO_20 | WED | Espritscriminels |
| 258 | 1380175200 | 2 | null | 000-011-000 | null | null | TIME_06_TO_07 | THU | Tlmatin(suite) |
| 259 | 1380178800 | 2 | null | 000-011-000 | null | null | TIME_07_TO_08 | THU | Dansquelleta-gre |
| 260 | 1380182400 | 2 | null | 000-011-000 | null | null | TIME_08_TO_09 | THU | C'estauprogramme |
| 261 | 1380186000 | 1 | null | 000-013-000 | 10765454 | null | TIME_09_TO_10 | THU | Petitssecretsentrevoisins |
| 262 | 1380189600 | 1 | null | 000-010-000 | null | null | TIME_10_TO_11 | THU | Lesdouzecoupsdemidi |
| 263 | 1380193200 | 1 | null | 000-009-000 | null | null | TIME_11_TO_12 | THU | Journal |
| 264 | 1380207600 | 11 | 3248750-3-9 | 000-013-000 | 3248750 | 3248750-3 | TIME_15_TO_16 | THU | Enquteurmalgrlui |
| 265 | 1380214800 | 1 | null | 000-010-000 | null | null | TIME_17_TO_18 | THU | Lejusteprix |
| 266 | 1380218400 | 1 | null | 000-009-000 | null | null | TIME_18_TO_19 | THU | Journal |
| 267 | 1380225600 | 1 | 11495396-4-8 | 000-013-000 | 11495396 | 11495396-4 | TIME_20_TO_21 | THU | Profilage |

[{"ChannelId":"30","Genre":"000-013-000","TimeBin":"TIME_17_TO_18","Day":"THU","contentName":"2900Happiness"},

{"ChannelId":"1","Genre":"000-009-000","TimeBin":"TIME_18_TO_19","Day":"THU","contentName":"Journal"},

{"ChannelId":"107","Genre":"000-013-000","TimeBin":"TIME_19_TO_20","Day":"THU","contentName":"DrHouse"},

{"ChannelId":"33","Genre":"000-017-023","TimeBin":"TIME_20_TO_21","Day":"THU","contentName":"CyborgConquest"},

{"ChannelId":"1","Genre":"000-017-013","TimeBin":"TIME_13_TO_14","Day":"TUE","contentName":"Laconvictiondemafille"},

{"ChannelId":"12","Genre":"000-002-000","TimeBin":"TIME_16_TO_17","Day":"TUE","contentName":"L'ledesvrits"},

{"ChannelId":"1","Genre":"000-010-000","TimeBin":"TIME_17_TO_18","Day":"TUE","contentName":"Lejusteprix"},

{"ChannelId":"1","Genre":"000-009-000","TimeBin":"TIME_18_TO_19","Day":"TUE","contentName":"Journal"},

{"ChannelId":"8","Genre":"000-008-001","TimeBin":"TIME_19_TO_20","Day":"TUE","contentName":"Ultimevengeance"},

{"ChannelId":"2","Genre":"000-009-000","TimeBin":"TIME_07_TO_08","Day":"WED","contentName":"Mtodesplages"},

{"ChannelId":"2","Genre":"000-011-000","TimeBin":"TIME_08_TO_09","Day":"WED","contentName":"Lejourotoutabascul"},

{"ChannelId":"1","Genre":"000-010-000","TimeBin":"TIME_10_TO_11","Day":"WED","contentName":"Lesdouzecoupsdemidi"},

{"ChannelId":"1","Genre":"000-009-000","TimeBin":"TIME_11_TO_12","Day":"WED","contentName":"Journal"},

{"ChannelId":"131","Genre":"000-013-000","TimeBin":"TIME_13_TO_14","Day":"WED","contentName":"Demainlaune"},

{"ChannelId":"12","Genre":"000-002-000","TimeBin":"TIME_15_TO_16","Day":"WED","contentName":"Lemag"},

{"ChannelId":"30","Genre":"000-007-000","TimeBin":"TIME_16_TO_17","Day":"WED","contentName":"TopModels"},

{"ChannelId":"1","Genre":"000-010-000","TimeBin":"TIME_17_TO_18","Day":"WED","contentName":"Lejusteprix"},

{"ChannelId":"1","Genre":"000-009-000","TimeBin":"TIME_18_TO_19","Day":"WED","contentName":"Journal"},

{"ChannelId":"1","Genre":"000-013-000","TimeBin":"TIME_19_TO_20","Day":"WED","contentName":"Espritscriminels"},

{"ChannelId":"1","Genre":"000-013-000","TimeBin":"TIME_20_TO_21","Day":"WED","contentName":"Espritscriminels"},

{"ChannelId":"10","Genre":"000-017-013","TimeBin":"TIME_09_TO_10","Day":"THU","contentName":"Lelitdudiable"},

{"ChannelId":"1","Genre":"000-010-000","TimeBin":"TIME_10_TO_11","Day":"THU","contentName":"Lesdouzecoupsdemidi"},

{"ChannelId":"1","Genre":"000-009-000","TimeBin":"TIME_11_TO_12","Day":"THU","contentName":"Journal"},

{"ChannelId":"1","Genre":"000-017-024","TimeBin":"TIME_13_TO_14","Day":"THU","contentName":"Seulecontretous"},

{"ChannelId":"1","Genre":"000-002-000","TimeBin":"TIME_14_TO_15","Day":"THU","contentName":"Quatremariagespourunelunedemiel"},

{"ChannelId":"1","Genre":"000-010-000","TimeBin":"TIME_17_TO_18","Day":"THU","contentName":"Lejusteprix"},

{"ChannelId":"1","Genre":"000-009-000","TimeBin":"TIME_18_TO_19","Day":"THU","contentName":"Journal"},

{"ChannelId":"33","Genre":"000-017-020","TimeBin":"TIME_20_TO_21","Day":"THU","contentName":"Lesailesdelaterreur"},

{"ChannelId":"2","Genre":"000-007-000","TimeBin":"TIME_07_TO_08","Day":"FRI","contentName":"Desjoursetdesvies"},

{"ChannelId":"2","Genre":"000-011-000","TimeBin":"TIME_08_TO_09","Day":"FRI","contentName":"Lejourotoutabascul"},

{"ChannelId":"2","Genre":"000-013-000","TimeBin":"TIME_09_TO_10","Day":"FRI","contentName":"LaminuteduChat"},

{"ChannelId":"1","Genre":"000-010-000","TimeBin":"TIME_10_TO_11","Day":"FRI","contentName":"Lesdouzecoupsdemidi"},

{"ChannelId":"1","Genre":"000-009-000","TimeBin":"TIME_11_TO_12","Day":"FRI","contentName":"Journal"},

{"ChannelId":"6","Genre":"000-017-013","TimeBin":"TIME_12_TO_13","Day":"FRI","contentName":"Lepactedesnon-dits"},

{"ChannelId":"1","Genre":"000-002-000","TimeBin":"TIME_14_TO_15","Day":"FRI","contentName":"Quatremariagespourunelunedemiel"},

{"ChannelId":"1","Genre":"000-010-000","TimeBin":"TIME_17_TO_18","Day":"FRI","contentName":"Lejusteprix"},

{"ChannelId":"1","Genre":"000-009-000","TimeBin":"TIME_18_TO_19","Day":"FRI","contentName":"Journal"},

EP 2 945 113 A1

{"ChannelId":"1","Genre":"000-002-000","TimeBin":"TIME_21_TO_22","Day":"FRI","contentName":"SecretStory"},

{"ChannelId":"1","Genre":"000-002-000","TimeBin":"TIME_22_TO_23","Day":"FRI","contentName":"SecretStory"},

{"ChannelId":"11","Genre":"000-017-011","TimeBin":"TIME_08_TO_09","Day":"SUN","contentName":"Untransatpourhuit"},

{"ChannelId":"1","Genre":"000-011-000","TimeBin":"TIME_09_TO_10","Day":"SUN","contentName":"Tlfoot"},

{"ChannelId":"1","Genre":"000-010-000","TimeBin":"TIME_10_TO_11","Day":"SUN","contentName":"Lesdouzecoupsdemidi"},

{"ChannelId":"1","Genre":"000-009-000","TimeBin":"TIME_11_TO_12","Day":"SUN","contentName":"Journal"},

{"ChannelId":"3","Genre":"000-009-000","TimeBin":"TIME_17_TO_18","Day":"SUN","contentName":"19/20"},

{"ChannelId":"1","Genre":"000-009-000","TimeBin":"TIME_18_TO_19","Day":"SUN","contentName":"Journal"},

{"ChannelId":"131","Genre":"000-008-023","TimeBin":"TIME_19_TO_20","Day":"SUN","contentName":"Unevievole"},

{"ChannelId":"1","Genre":"000-013-000","TimeBin":"TIME_23_TO_24","Day":"SUN","contentName":"Dexter"},

{"ChannelId":"2","Genre":"000-011-000","TimeBin":"TIME_07_TO_08","Day":"MON","contentName":"Dansquelleta-gre"},

{"ChannelId":"9","Genre":"000-012-000","TimeBin":"TIME_09_TO_10","Day":"MON","contentName":"@vosclips"},

{"ChannelId":"1","Genre":"000-010-000","TimeBin":"TIME_10_TO_11","Day":"MON","contentName":"Lesdouzecoupsdemidi"},

{"ChannelId":"1","Genre":"000-009-000","TimeBin":"TIME_11_TO_12","Day":"MON","contentName":"Journal"},

{"ChannelId":"1","Genre":"000-002-000","TimeBin":"TIME_16_TO_17","Day":"MON","contentName":"SecretStory"},

{"ChannelId":"1","Genre":"000-010-000","TimeBin":"TIME_17_TO_18","Day":"MON","contentName":"Lejusteprix"},

{"ChannelId":"1","Genre":"000-009-000","TimeBin":"TIME_18_TO_19","Day":"MON","contentName":"Journal"},

{"ChannelId":"1","Genre":"000-013-000","TimeBin":"TIME_19_TO_20","Day":"MON","contentName":"Lesexperts"},

{"ChannelId":"1","Genre":"000-013-000","TimeBin":"TIME_20_TO_21","Day":"MON","contentName":"Lesexperts"},

{"ChannelId":"2","Genre":"000-011-000","TimeBin":"TIME_06_TO_07","Day":"TUE","contentName":"Tlmatin(suite)"},

{"ChannelId":"1","Genre":"000-013-000","TimeBin":"TIME_09_TO_10","Day":"TUE","contentName":"Petitssecretsentrevoisins"},

{"ChannelId":"1","Genre":"000-010-000","TimeBin":"TIME_10_TO_11","Day":"TUE","contentName":"Lesdouzecoupsdemidi"},

{"ChannelId":"1","Genre":"000-009-000","TimeBin":"TIME_11_TO_12","Day":"TUE","contentName":"Journal"},

{"ChannelId":"1","Genre":"000-017-013","TimeBin":"TIME_13_TO_14","Day":"TUE","contentName":"Scandaleaupensionnat"},

{"ChannelId":"30","Genre":"000-007-000","TimeBin":"TIME_16_TO_17","Day":"TUE","contentName":"TopModels"},

{"ChannelId":"1","Genre":"000-010-000","TimeBin":"TIME_17_TO_18","Day":"TUE","contentName":"Lejusteprix"},

{"ChannelId":"1","Genre":"000-009-000","TimeBin":"TIME_18_TO_19","Day":"TUE","contentName":"Journal"},

{"ChannelId":"12","Genre":"000-017-024","TimeBin":"TIME_21_TO_22","Day":"TUE","contentName":"SexCrimes"},

{"ChannelId":"2","Genre":"000-009-000","TimeBin":"TIME_06_TO_07","Day":"WED","contentName":"Journal"},

{"ChannelId":"2","Genre":"000-007-000","TimeBin":"TIME_07_TO_08","Day":"WED","contentName":"TopModels"},

{"ChannelId":"10","Genre":"000-013-000","TimeBin":"TIME_09_TO_10","Day":"WED","contentName":"AlerteCobra"},

{"ChannelId":"1","Genre":"000-010-000","TimeBin":"TIME_10_TO_11","Day":"WED","contentName":"Lesdouzecoupsdemidi"},

{"ChannelId":"1","Genre":"000-009-000","TimeBin":"TIME_11_TO_12","Day":"WED","contentName":"Journal"},

{"ChannelId":"1","Genre":"000-009-000","TimeBin":"TIME_18_TO_19","Day":"WED","contentName":"Journal"},

{"ChannelId":"1","Genre":"000-013-000","TimeBin":"TIME_20_TO_21","Day":"WED","contentName":"Espritscriminels"},

{"ChannelId":"1","Genre":"000-013-000","TimeBin":"TIME_21_TO_22","Day":"WED","contentName":"DrHouse"},

{"ChannelId":"1","Genre":"000-013-000","TimeBin":"TIME_22_TO_23","Day":"WED","contentName":"DrHouse"},

{"ChannelId":"2","Genre":"000-011-000","TimeBin":"TIME_05_TO_06","Day":"THU","contentName":"Tlmatin(suite)"},

EP 2 945 113 A1

{"ChannelId":"2","Genre":"000-009-000","TimeBin":"TIME_06_TO_07","Day":"THU","contentName":"Journal"},

{"ChannelId":"1","Genre":"000-010-000","TimeBin":"TIME_10_TO_11","Day":"THU","contentName":"Lesdouzecoupsdemidi"},

{"ChannelId":"1","Genre":"000-009-000","TimeBin":"TIME_11_TO_12","Day":"THU","contentName":"Journal"},

{"ChannelId":"1","Genre":"000-017-013","TimeBin":"TIME_13_TO_14","Day":"THU","contentName":"Ladisparitiondemonenfant"},

{"ChannelId":"30","Genre":"000-007-000","TimeBin":"TIME_16_TO_17","Day":"THU","contentName":"TopModels"},

{"ChannelId":"1","Genre":"000-010-000","TimeBin":"TIME_17_TO_18","Day":"THU","contentName":"Lejusteprix"},

{"ChannelId":"1","Genre":"000-009-000","TimeBin":"TIME_18_TO_19","Day":"THU","contentName":"Journal"},

{"ChannelId":"107","Genre":"000-013-000","TimeBin":"TIME_21_TO_22","Day":"THU","contentName":"DrHouse"},

{"ChannelId":"2","Genre":"000-009-000","TimeBin":"TIME_06_TO_07","Day":"FRI","contentName":"Journal"},

{"ChannelId":"2","Genre":"000-011-000","TimeBin":"TIME_07_TO_08","Day":"FRI","contentName":"Dansquelleta-gre"},

{"ChannelId":"2","Genre":"000-011-000","TimeBin":"TIME_08_TO_09","Day":"FRI","contentName":"C'estauprogramme"},

{"ChannelId":"10","Genre":"000-013-000","TimeBin":"TIME_09_TO_10","Day":"FRI","contentName":"AlerteCobra"},

{"ChannelId":"1","Genre":"000-010-000","TimeBin":"TIME_10_TO_11","Day":"FRI","contentName":"Lesdouzecoupsdemidi"},

{"ChannelId":"1","Genre":"000-009-000","TimeBin":"TIME_11_TO_12","Day":"FRI","contentName":"Journal"},

{"ChannelId":"131","Genre":"000-013-000","TimeBin":"TIME_15_TO_16","Day":"FRI","contentName":"Rescueunitspciale"},

{"ChannelId":"30","Genre":"000-007-000","TimeBin":"TIME_16_TO_17","Day":"FRI","contentName":"TopModels"},

{"ChannelId":"4","Genre":"000-002-000","TimeBin":"TIME_17_TO_18","Day":"FRI","contentName":"Legrandjournal"},

{"ChannelId":"1","Genre":"000-002-000","TimeBin":"TIME_21_TO_22","Day":"FRI","contentName":"SecretStory"},

{"ChannelId":"1","Genre":"000-002-000","TimeBin":"TIME_22_TO_23","Day":"FRI","contentName":"SecretStory"},

{"ChannelId":"7","Genre":"000-013-000","TimeBin":"TIME_06_TO_07","Day":"SAT","contentName":"Lepacte"},

{"ChannelId":"11","Genre":"000-011-000","TimeBin":"TIME_14_TO_15","Day":"SAT","contentName":"Tousdiffrents"},

{"ChannelId":"30","Genre":"000-013-000","TimeBin":"TIME_16_TO_17","Day":"SAT","contentName":"112Unitd'urgence"},

{"ChannelId":"1","Genre":"000-011-000","TimeBin":"TIME_17_TO_18","Day":"SAT","contentName":"50mnInside"},

{"ChannelId":"1","Genre":"000-009-000","TimeBin":"TIME_18_TO_19","Day":"SAT","contentName":"Journal"},

{"ChannelId":"18","Genre":"000-002-000","TimeBin":"TIME_19_TO_20","Day":"SAT","contentName":"FortBoyard"},

{"ChannelId":"18","Genre":"000-002-000","TimeBin":"TIME_20_TO_21","Day":"SAT","contentName":"FortBoyard"},

{"ChannelId":"1","Genre":"000-013-000","TimeBin":"TIME_22_TO_23","Day":"SAT","contentName":"Lesexperts"},

{"ChannelId":"1","Genre":"000-013-000","TimeBin":"TIME_23_TO_24","Day":"SAT","contentName":"Lesexperts"},

{"ChannelId":"11","Genre":"000-011-000","TimeBin":"TIME_00_TO_01","Day":"SUN","contentName":"Catchamricain"},

{"ChannelId":"11","Genre":"000-011-000","TimeBin":"TIME_01_TO_02","Day":"SUN","contentName":"Catchamricain"},

{"ChannelId":"1","Genre":"000-013-000","TimeBin":"TIME_12_TO_13","Day":"SUN","contentName":"DrHouse"},

{"ChannelId":"1","Genre":"000-013-000","TimeBin":"TIME_13_TO_14","Day":"SUN","contentName":"DrHouse"},

{"ChannelId":"1","Genre":"000-011-000","TimeBin":"TIME_17_TO_18","Day":"SUN","contentName":"Lojet'emmnerai"},

{"ChannelId":"1","Genre":"000-009-000","TimeBin":"TIME_18_TO_19","Day":"SUN","contentName":"Journal"},

{"ChannelId":"1","Genre":"000-008-054","TimeBin":"TIME_19_TO_20","Day":"SUN","contentName":"Djvu"},

{"ChannelId":"12","Genre":"000-008-054","TimeBin":"TIME_20_TO_21","Day":"SUN","contentName":"Apparences"},

{"ChannelId":"1","Genre":"000-008-054","TimeBin":"TIME_21_TO_22","Day":"SUN","contentName":"Djvu"},

{"ChannelId":"2","Genre":"000-011-000","TimeBin":"TIME_06_TO_07","Day":"MON","contentName":"Tlmatin(suite)"},

{"ChannelId":"1","Genre":"000-009-000","TimeBin":"TIME_11_TO_12","Day":"MON","contentName":"Journal"},

{"ChannelId":"1","Genre":"000-017-001","TimeBin":"TIME_13_TO_14","Day":"MON","contentName":"Rendez-moimafille"},

{"ChannelId":"31","Genre":"000-013-000","TimeBin":"TIME_15_TO_16","Day":"MON","contentName":"Drlesdedames"},

{"ChannelId":"30","Genre":"000-007-000","TimeBin":"TIME_16_TO_17","Day":"MON","contentName":"TopModels"},

{"ChannelId":"9","Genre":"000-013-000","TimeBin":"TIME_17_TO_18","Day":"MON","contentName":"Lesch'tisHollywood"},

{"ChannelId":"1","Genre":"000-009-000","TimeBin":"TIME_18_TO_19","Day":"MON","contentName":"Journal"},

{"ChannelId":"1","Genre":"000-013-000","TimeBin":"TIME_19_TO_20","Day":"MON","contentName":"Lesexperts"},

{"ChannelId":"1","Genre":"000-013-000","TimeBin":"TIME_20_TO_21","Day":"MON","contentName":"Lesexperts"},

{"ChannelId":"1","Genre":"000-013-000","TimeBin":"TIME_21_TO_22","Day":"MON","contentName":"Lesexperts"},

{"ChannelId":"2","Genre":"000-011-000","TimeBin":"TIME_05_TO_06","Day":"TUE","contentName":"Tlmatin(suite)"},

{"ChannelId":"2","Genre":"000-009-000","TimeBin":"TIME_06_TO_07","Day":"TUE","contentName":"Journal"},

{"ChannelId":"2","Genre":"000-011-000","TimeBin":"TIME_07_TO_08","Day":"TUE","contentName":"Dansquelleta-gre"},

{"ChannelId":"2","Genre":"000-011-000","TimeBin":"TIME_08_TO_09","Day":"TUE","contentName":"C'estauprogramme"},

{"ChannelId":"1","Genre":"000-013-000","TimeBin":"TIME_09_TO_10","Day":"TUE","contentName":"Petitssecretsentrevoisins"},

{"ChannelId":"1","Genre":"000-010-000","TimeBin":"TIME_10_TO_11","Day":"TUE","contentName":"Lesdouzecoupsdemidi"},

{"ChannelId":"1","Genre":"000-009-000","TimeBin":"TIME_11_TO_12","Day":"TUE","contentName":"Journal"},

{"ChannelId":"1","Genre":"000-017-013","TimeBin":"TIME_13_TO_14","Day":"TUE","contentName":"Unenfantvendre"},

{"ChannelId":"12","Genre":"000-002-000","TimeBin":"TIME_15_TO_16","Day":"TUE","contentName":"Lemag"},

{"ChannelId":"30","Genre":"000-007-000","TimeBin":"TIME_16_TO_17","Day":"TUE","contentName":"TopModels"},

EP 2 945 113 A1

{"ChannelId":"1","Genre":"000-009-000","TimeBin":"TIME_18_TO_19","Day":"TUE","contentName":"Journal"},

{"ChannelId":"1","Genre":"000-011-000","TimeBin":"TIME_05_TO_06","Day":"WED","contentName":"TFou"},

{"ChannelId":"2","Genre":"000-011-000","TimeBin":"TIME_07_TO_08","Day":"WED","contentName":"Dansquelleta-gre"},

{"ChannelId":"10","Genre":"000-017-024","TimeBin":"TIME_08_TO_09","Day":"WED","contentName":"Crimepassionnel"},

{"ChannelId":"1","Genre":"000-013-000","TimeBin":"TIME_09_TO_10","Day":"WED","contentName":"Petitssecretsentrevoisins"},

{"ChannelId":"1","Genre":"000-010-000","TimeBin":"TIME_10_TO_11","Day":"WED","contentName":"Lesdouzecoupsdemidi"},

{"ChannelId":"1","Genre":"000-009-000","TimeBin":"TIME_11_TO_12","Day":"WED","contentName":"Journal"},

{"ChannelId":"1","Genre":"000-017-011","TimeBin":"TIME_13_TO_14","Day":"WED","contentName":"Josphine,angegardien"},

{"ChannelId":"12","Genre":"000-002-000","TimeBin":"TIME_14_TO_15","Day":"WED","contentName":"L'ledesvrits"},

{"ChannelId":"12","Genre":"000-002-000","TimeBin":"TIME_15_TO_16","Day":"WED","contentName":"Lemag"},

{"ChannelId":"30","Genre":"000-007-000","TimeBin":"TIME_16_TO_17","Day":"WED","contentName":"TopModels"},

{"ChannelId":"1","Genre":"000-010-000","TimeBin":"TIME_17_TO_18","Day":"WED","contentName":"Lejusteprix"},

{"ChannelId":"1","Genre":"000-009-000","TimeBin":"TIME_18_TO_19","Day":"WED","contentName":"Journal"},

{"ChannelId":"1","Genre":"000-013-000","TimeBin":"TIME_19_TO_20","Day":"WED","contentName":"Espritscriminels"},

{"ChannelId":"1","Genre":"000-013-000","TimeBin":"TIME_20_TO_21","Day":"WED","contentName":"Espritscriminels"},

{"ChannelId":"2","Genre":"000-011-000","TimeBin":"TIME_05_TO_06","Day":"THU","contentName":"Tlmatin(suite)"},

{"ChannelId":"2","Genre":"000-009-000","TimeBin":"TIME_06_TO_07","Day":"THU","contentName":"Journal"},

{"ChannelId":"1","Genre":"000-013-000","TimeBin":"TIME_09_TO_10","Day":"THU","contentName":"Petitssecretsentrevoisins"},

{"ChannelId":"1","Genre":"000-010-000","TimeBin":"TIME_10_TO_11","Day":"THU","contentName":"Lesdouzecoupsdemidi"},

{"ChannelId":"1","Genre":"000-009-000","TimeBin":"TIME_11_TO_12","Day":"THU","contentName":"Journal"},

{"ChannelId":"1","Genre":"000-017-024","TimeBin":"TIME_13_TO_14","Day":"THU","contentName":"Intimeconviction"},

{"ChannelId":"9","Genre":"000-013-000","TimeBin":"TIME_15_TO_16","Day":"THU","contentName":"Lesch'tisHollywood"},

{"ChannelId":"30","Genre":"000-007-000","TimeBin":"TIME_16_TO_17","Day":"THU","contentName":"TopModels"},

{"ChannelId":"1","Genre":"000-010-000","TimeBin":"TIME_17_TO_18","Day":"THU","contentName":"Lejusteprix"},

{"ChannelId":"1","Genre":"000-009-000","TimeBin":"TIME_18_TO_19","Day":"THU","contentName":"Journal"},

{"ChannelId":"19","Genre":"000-017-013","TimeBin":"TIME_21_TO_22","Day":"THU","contentName":"L'empiredutigre"},

{"ChannelId":"19","Genre":"000-002-000","TimeBin":"TIME_22_TO_23","Day":"THU","contentName":"JeuxdelaFrancophonie"},

{"ChannelId":"19","Genre":"000-013-000","TimeBin":"TIME_23_TO_24","Day":"THU","contentName":"Lost"},

{"ChannelId":"19","Genre":"000-003-000","TimeBin":"TIME_00_TO_01","Day":"FRI","contentName":"Vuduciel"},

{"ChannelId":"1","Genre":"000-013-000","TimeBin":"TIME_08_TO_09","Day":"FRI","contentName":"Petitssecretsentrevoisins"},

{"ChannelId":"1","Genre":"000-010-000","TimeBin":"TIME_10_TO_11","Day":"FRI","contentName":"Lesdouzecoupsdemidi"},

{"ChannelId":"1","Genre":"000-009-000","TimeBin":"TIME_11_TO_12","Day":"FRI","contentName":"Journal"},

{"ChannelId":"1","Genre":"000-010-000","TimeBin":"TIME_17_TO_18","Day":"FRI","contentName":"Lejusteprix"},

{"ChannelId":"1","Genre":"000-009-000","TimeBin":"TIME_18_TO_19","Day":"FRI","contentName":"Journal"},

{"ChannelId":"113","Genre":"000-013-000","TimeBin":"TIME_19_TO_20","Day":"FRI","contentName":"That'70sShow"},

{"ChannelId":"1","Genre":"000-002-000","TimeBin":"TIME_20_TO_21","Day":"FRI","contentName":"TheBest,lemeilleurartiste"},

{"ChannelId":"1","Genre":"000-002-000","TimeBin":"TIME_23_TO_24","Day":"FRI","contentName":"SecretStory"},

{"ChannelId":"2","Genre":"000-011-000","TimeBin":"TIME_06_TO_07","Day":"SAT","contentName":"Tlmatin"},

EP 2 945 113 A1

{"ChannelId":"3","Genre":"000-009-000","TimeBin":"TIME_10_TO_11","Day":"SAT","contentName":"12/13"},

{"ChannelId":"1","Genre":"000-009-000","TimeBin":"TIME_11_TO_12","Day":"SAT","contentName":"Journal"},

{"ChannelId":"14","Genre":"000-013-000","TimeBin":"TIME_14_TO_15","Day":"SAT","contentName":"FBI"},

{"ChannelId":"10","Genre":"000-013-000","TimeBin":"TIME_17_TO_18","Day":"SAT","contentName":"Lesmystresdel'amour"},

{"ChannelId":"1","Genre":"000-009-000","TimeBin":"TIME_18_TO_19","Day":"SAT","contentName":"Journal"},

{"ChannelId":"1","Genre":"000-002-000","TimeBin":"TIME_20_TO_21","Day":"SAT","contentName":"CesoirtoutestpermisavecArthur"},

{"ChannelId":"603","Genre":"000-013-000","TimeBin":"TIME_09_TO_10","Day":"SUN","contentName":"Mreetfille"},

{"ChannelId":"603","Genre":"000-013-000","TimeBin":"TIME_10_TO_11","Day":"SUN","contentName":"Jessie"},

{"ChannelId":"603","Genre":"000-013-000","TimeBin":"TIME_11_TO_12","Day":"SUN","contentName":"Georgiadanstoussestats"},

{"ChannelId":"1","Genre":"000-013-000","TimeBin":"TIME_12_TO_13","Day":"SUN","contentName":"DrHouse"},

{"ChannelId":"1","Genre":"000-013-000","TimeBin":"TIME_21_TO_22","Day":"SUN","contentName":"Lesexperts"},

{"ChannelId":"2","Genre":"000-011-000","TimeBin":"TIME_05_TO_06","Day":"MON","contentName":"Tlmatin(suite)"},

{"ChannelId":"2","Genre":"000-009-000","TimeBin":"TIME_06_TO_07","Day":"MON","contentName":"Journal"},

{"ChannelId":"2","Genre":"000-011-000","TimeBin":"TIME_07_TO_08","Day":"MON","contentName":"Dansquelleta-gre"},

{"ChannelId":"2","Genre":"000-011-000","TimeBin":"TIME_08_TO_09","Day":"MON","contentName":"C'estauprogramme"},

{"ChannelId":"1","Genre":"000-017-017","TimeBin":"TIME_13_TO_14","Day":"MON","contentName":"L'espritd'uneautre"},

{"ChannelId":"30","Genre":"000-007-000","TimeBin":"TIME_16_TO_17","Day":"MON","contentName":"TopModels"},

{"ChannelId":"1","Genre":"000-010-000","TimeBin":"TIME_17_TO_18","Day":"MON","contentName":"Lejusteprix"},

{"ChannelId":"1","Genre":"000-009-000","TimeBin":"TIME_18_TO_19","Day":"MON","contentName":"Journal"},

{"ChannelId":"1","Genre":"000-013-000","TimeBin":"TIME_19_TO_20","Day":"MON","contentName":"Lesexperts"},

{"ChannelId":"1","Genre":"000-013-000","TimeBin":"TIME_20_TO_21","Day":"MON","contentName":"Lesexperts"},

{"ChannelId":"2","Genre":"000-011-000","TimeBin":"TIME_05_TO_06","Day":"TUE","contentName":"Tlmatin(suite)"},

{"ChannelId":"2","Genre":"000-009-000","TimeBin":"TIME_06_TO_07","Day":"TUE","contentName":"Journal"},

{"ChannelId":"1","Genre":"000-002-000","TimeBin":"TIME_09_TO_10","Day":"TUE","contentName":"Legrand"},

{"ChannelId":"107","Genre":"000-013-000","TimeBin":"TIME_12_TO_13","Day":"TUE","contentName":"NewYork911"},

{"ChannelId":"6","Genre":"000-011-000","TimeBin":"TIME_13_TO_14","Day":"TUE","contentName":"All,docteurs!"},

{"ChannelId":"12","Genre":"000-002-000","TimeBin":"TIME_15_TO_16","Day":"TUE","contentName":"Lemag"},

{"ChannelId":"2","Genre":"000-011-000","TimeBin":"TIME_06_TO_07","Day":"WED","contentName":"Tlmatin(suite)"},

{"ChannelId":"2","Genre":"000-011-000","TimeBin":"TIME_07_TO_08","Day":"WED","contentName":"Dansquelleta-gre"},

{"ChannelId":"2","Genre":"000-009-000","TimeBin":"TIME_08_TO_09","Day":"WED","contentName":"Mtooutremer"},

{"ChannelId":"2","Genre":"000-010-000","TimeBin":"TIME_09_TO_10","Day":"WED","contentName":"Motus"},

{"ChannelId":"12","Genre":"000-002-000","TimeBin":"TIME_14_TO_15","Day":"WED","contentName":"L'ledesvrits"},

{"ChannelId":"12","Genre":"000-002-000","TimeBin":"TIME_15_TO_16","Day":"WED","contentName":"Lemag"},

{"ChannelId":"2","Genre":"000-011-000","TimeBin":"TIME_05_TO_06","Day":"THU","contentName":"Tlmatin(suite)"},

{"ChannelId":"2","Genre":"000-009-000","TimeBin":"TIME_06_TO_07","Day":"THU","contentName":"Journal"},

{"ChannelId":"2","Genre":"000-011-000","TimeBin":"TIME_07_TO_08","Day":"THU","contentName":"Dansquelleta-gre"},

{"ChannelId":"2","Genre":"000-011-000","TimeBin":"TIME_08_TO_09","Day":"THU","contentName":"C'estauprogramme"},

{"ChannelId":"2","Genre":"000-007-000","TimeBin":"TIME_07_TO_08","Day":"FRI","contentName":"Desjoursetdesvies"},

{"ChannelId":"1","Genre":"000-013-000","TimeBin":"TIME_08_TO_09","Day":"FRI","contentName":"Petitssecretsentrevoisins"},

{"ChannelId":"1","Genre":"000-013-000","TimeBin":"TIME_09_TO_10","Day":"FRI","contentName":"Petitssecretsentrevoisins"},

{"ChannelId":"1","Genre":"000-010-000","TimeBin":"TIME_10_TO_11","Day":"FRI","contentName":"Lesdouzecoupsdemidi"},

{"ChannelId":"1","Genre":"000-009-000","TimeBin":"TIME_11_TO_12","Day":"FRI","contentName":"Journal"},

{"ChannelId":"1","Genre":"000-010-000","TimeBin":"TIME_17_TO_18","Day":"FRI","contentName":"Unefamilleenor"},

{"ChannelId":"1","Genre":"000-009-000","TimeBin":"TIME_18_TO_19","Day":"FRI","contentName":"Journal"},

{"ChannelId":"18","Genre":"000-017-013","TimeBin":"TIME_20_TO_21","Day":"FRI","contentName":"Uncoeurgagnant"},

{"ChannelId":"18","Genre":"000-013-000","TimeBin":"TIME_21_TO_22","Day":"FRI","contentName":"Heartland"},

{"ChannelId":"14","Genre":"000-013-000","TimeBin":"TIME_11_TO_12","Day":"SAT","contentName":"DoctorWho"},

{"ChannelId":"1","Genre":"000-009-000","TimeBin":"TIME_18_TO_19","Day":"SAT","contentName":"Journal"},

{"ChannelId":"1","Genre":"000-013-000","TimeBin":"TIME_21_TO_22","Day":"SAT","contentName":"Lesexperts"},

{"ChannelId":"1","Genre":"000-010-000","TimeBin":"TIME_10_TO_11","Day":"SUN","contentName":"Lesdouzecoupsdemidi"},

{"ChannelId":"1","Genre":"000-009-000","TimeBin":"TIME_11_TO_12","Day":"SUN","contentName":"Journal"},

{"ChannelId":"13","Genre":"000-011-000","TimeBin":"TIME_14_TO_15","Day":"SUN","contentName":"Com'enpolitique"},

{"ChannelId":"133","Genre":"000-011-000","TimeBin":"TIME_16_TO_17","Day":"SUN","contentName":"Sanstabou"},

{"ChannelId":"12","Genre":"000-002-000","TimeBin":"TIME_17_TO_18","Day":"SUN","contentName":"L'ledesvrits"},

{"ChannelId":"1","Genre":"000-009-000","TimeBin":"TIME_18_TO_19","Day":"SUN","contentName":"Journal"},

{"ChannelId":"1","Genre":"000-013-000","TimeBin":"TIME_21_TO_22","Day":"SUN","contentName":"Lesexperts"},

{"ChannelId":"2","Genre":"000-009-000","TimeBin":"TIME_05_TO_06","Day":"MON","contentName":"Journal"},

{"ChannelId":"2","Genre":"000-009-000","TimeBin":"TIME_06_TO_07","Day":"MON","contentName":"Journal"},

{"ChannelId":"2","Genre":"000-011-000","TimeBin":"TIME_07_TO_08","Day":"MON","contentName":"Dansquelleta-gre"},

{"ChannelId":"2","Genre":"000-011-000","TimeBin":"TIME_08_TO_09","Day":"MON","contentName":"C'estauprogramme"},

{"ChannelId":"1","Genre":"000-013-000","TimeBin":"TIME_09_TO_10","Day":"MON","contentName":"Petitssecretsentrevoisins"},

{"ChannelId":"1","Genre":"000-010-000","TimeBin":"TIME_10_TO_11","Day":"MON","contentName":"Lesdouzecoupsdemidi"},

{"ChannelId":"1","Genre":"000-009-000","TimeBin":"TIME_11_TO_12","Day":"MON","contentName":"Journal"},

{"ChannelId":"1","Genre":"000-017-024","TimeBin":"TIME_12_TO_13","Day":"MON","contentName":"Voleused'enfant"},

{"ChannelId":"9","Genre":"000-013-000","TimeBin":"TIME_14_TO_15","Day":"MON","contentName":"Lesch'tisHollywood"},

{"ChannelId":"12","Genre":"000-002-000","TimeBin":"TIME_15_TO_16","Day":"MON","contentName":"Lemag"},

{"ChannelId":"1","Genre":"000-010-000","TimeBin":"TIME_17_TO_18","Day":"MON","contentName":"Lejusteprix"},

{"ChannelId":"1","Genre":"000-009-000","TimeBin":"TIME_18_TO_19","Day":"MON","contentName":"Journal"},

{"ChannelId":"2","Genre":"000-011-000","TimeBin":"TIME_05_TO_06","Day":"TUE","contentName":"Tlmatin(suite)"},

{"ChannelId":"2","Genre":"000-009-000","TimeBin":"TIME_06_TO_07","Day":"TUE","contentName":"Journal"},

{"ChannelId":"2","Genre":"000-011-000","TimeBin":"TIME_07_TO_08","Day":"TUE","contentName":"Dansquelleta-gre"},

{"ChannelId":"1","Genre":"000-011-000","TimeBin":"TIME_10_TO_11","Day":"TUE","contentName":"L'affichedujour"},

{"ChannelId":"1","Genre":"000-009-000","TimeBin":"TIME_11_TO_12","Day":"TUE","contentName":"Journal"},

{"ChannelId":"12","Genre":"000-002-000","TimeBin":"TIME_14_TO_15","Day":"TUE","contentName":"L'ledesvrits"},

{"ChannelId":"12","Genre":"000-002-000","TimeBin":"TIME_15_TO_16","Day":"TUE","contentName":"L'ledesvrits"},

{"ChannelId":"1","Genre":"000-010-000","TimeBin":"TIME_16_TO_17","Day":"TUE","contentName":"Unefamilleenor"},

EP 2 945 113 A1

{"ChannelId":"1","Genre":"000-010-000","TimeBin":"TIME_17_TO_18","Day":"TUE","contentName":"Lejusteprix"},

{"ChannelId":"1","Genre":"000-009-000","TimeBin":"TIME_18_TO_19","Day":"TUE","contentName":"Journal"},

{"ChannelId":"2","Genre":"000-009-000","TimeBin":"TIME_06_TO_07","Day":"WED","contentName":"Journal"},

{"ChannelId":"1","Genre":"000-011-000","TimeBin":"TIME_08_TO_09","Day":"WED","contentName":"TFou"},

{"ChannelId":"2","Genre":"000-010-000","TimeBin":"TIME_09_TO_10","Day":"WED","contentName":"Motus"},

{"ChannelId":"1","Genre":"000-010-000","TimeBin":"TIME_10_TO_11","Day":"WED","contentName":"Lesdouzecoupsdemidi"},

{"ChannelId":"1","Genre":"000-009-000","TimeBin":"TIME_11_TO_12","Day":"WED","contentName":"Journal"},

{"ChannelId":"12","Genre":"000-002-000","TimeBin":"TIME_15_TO_16","Day":"WED","contentName":"L'ledesvrits"},

{"ChannelId":"3","Genre":"000-009-000","TimeBin":"TIME_17_TO_18","Day":"WED","contentName":"19/20"},

{"ChannelId":"1","Genre":"000-009-000","TimeBin":"TIME_18_TO_19","Day":"WED","contentName":"Journal"},

{"ChannelId":"1","Genre":"000-013-000","TimeBin":"TIME_19_TO_20","Day":"WED","contentName":"Espritscriminels"},

{"ChannelId":"2","Genre":"000-011-000","TimeBin":"TIME_06_TO_07","Day":"THU","contentName":"Tlmatin(suite)"},

{"ChannelId":"2","Genre":"000-011-000","TimeBin":"TIME_07_TO_08","Day":"THU","contentName":"Dansquelleta-gre"},

{"ChannelId":"2","Genre":"000-011-000","TimeBin":"TIME_08_TO_09","Day":"THU","contentName":"C'estauprogramme"},

{"ChannelId":"1","Genre":"000-013-000","TimeBin":"TIME_09_TO_10","Day":"THU","contentName":"Petitssecretsentrevoisins"},

{"ChannelId":"1","Genre":"000-010-000","TimeBin":"TIME_10_TO_11","Day":"THU","contentName":"Lesdouzecoupsdemidi"},

{"ChannelId":"1","Genre":"000-009-000","TimeBin":"TIME_11_TO_12","Day":"THU","contentName":"Journal"},

{"ChannelId":"11","Genre":"000-013-000","TimeBin":"TIME_15_TO_16","Day":"THU","contentName":"Enquteurmalgrlui"},

{"ChannelId":"1","Genre":"000-010-000","TimeBin":"TIME_17_TO_18","Day":"THU","contentName":"Lejusteprix"},

{"ChannelId":"1","Genre":"000-009-000","TimeBin":"TIME_18_TO_19","Day":"THU","contentName":"Journal"},
{"ChannelId":"1","Genre":"000-013-000","TimeBin":"TIME_20_TO_21","Day":"THU","contentName":"Profilage"}]

## Appendix C: Feature Columns Names

| 1 | 'ChannelId=1', | 79 | "contentName=C'estauprogramme", |
|---|---|---|---|
| 2 | 'ChannelId=10', | 80 | 'contentName=Catchamricain', |
| 3 | 'ChannelId=107', | 81 | 'contentName=CesoirtoutestpermisavecArthur', |
| 4 | 'ChannelId=11', | 82 | "contentName=Com'enpolitique", |
| 5 | 'ChannelId=113', | 83 | 'contentName=Crimepassionnel', |
| 6 | 'ChannelId=12', | 84 | 'contentName=CyborgConquest', |
| 7 | 'ChannelId=13', | 85 | 'contentName=Dansquelleta-gre', |
| 8 | 'ChannelId=131', | 86 | 'contentName=Demainlaune', |
| 9 | 'ChannelId=133', | 87 | 'contentName=Desjoursetdesvies', |
| 10 | 'ChannelId=14', | 88 | 'contentName=Dexter', |
| 11 | 'ChannelId=18', | 89 | 'contentName=Djvu', |
| 12 | 'ChannelId=19', | 90 | 'contentName=DoctorWho', |
| 13 | 'ChannelId=2', | 91 | 'contentName=DrHouse', |
| 14 | 'ChannelId=3', | 92 | 'contentName=Drlesdedames', |
| 15 | 'ChannelId=30', | 93 | 'contentName=Enquteurmalgrlui', |
| 16 | 'ChannelId=31', | 94 | 'contentName=Espritscriminels', |
| 17 | 'ChannelId=33', | 95 | 'contentName=FBI', |
| 18 | 'ChannelId=4', | 96 | 'contentName=FortBoyard', |
| 19 | 'ChannelId=6', | 97 | 'contentName=Georgiadanstoussestats', |
| 20 | 'ChannelId=603', | 98 | 'contentName=Heartland', |
| 21 | 'ChannelId=7', | 99 | 'contentName=Intimeconviction', |
| 22 | 'ChannelId=8', | 100 | 'contentName=Jessie', |
| 23 | 'ChannelId=9', | 101 | 'contentName=JeuxdelaFrancophonie', |
| 24 | 'Day=FRI', | 102 | 'contentName=Josphine,angegardien', |
| 25 | 'Day=MON', | 103 | 'contentName=Journal', |
| 26 | 'Day=SAT', | 104 | "contentName=L'affichedujour", |
| 27 | 'Day=SUN', | 105 | "contentName=L'empiredutigre", |
| 28 | 'Day=TH', | 106 | "contentName=L'espritd'uneautre", |
| 29 | 'Day=TUE', | 107 | "contentName=L'ledesvrits", |

| 30 | 'Day=WED', | 108 | 'contentName=Laconvictiondemafille', |
|---|---|---|---|
| 31 | 'Genre=000-002-000', | 109 | 'contentName=Ladisparitiondemonenfant', |
| 32 | 'Genre=000-003-000', | 110 | 'contentName=LaminuteduChat', |
| 33 | 'Genre=000-007-000', | 111 | 'contentName=Legrand', |
| 34 | 'Genre=000-008-001', | 112 | 'contentName=Legrandjournal', |
| 35 | 'Genre=000-008-023', | 113 | 'contentName=Lejourotoutabascul', |
| 36 | 'Genre=000-008-054', | 114 | 'contentName=Lejusteprix', |
| 37 | 'Genre=000-009-000', | 115 | 'contentName=Lelitdudiable', |
| 38 | 'Genre=000-010-000', | 116 | 'contentName=Lemag', |
| 39 | 'Genre=000-011-000', | 117 | 'contentName=Lepacte', |
| 40 | 'Genre=000-012-000', | 118 | 'contentName=Lepactedesnon-dits', |
| 41 | 'Genre=000-013-000', | 119 | 'contentName=Lesailesdelaterreur', |
| 42 | 'Genre=000-017-001', | 120 | "contentName=Lesch'tisHollywood", |
| 43 | 'Genre=000-017-011', | 121 | 'contentName=Lesdouzecoupsdemidi', |
| 44 | 'Genre=000-017-013', | 122 | 'contentName=Lesexperts', |
| 45 | 'Genre=000-017-017', | 123 | "contentName=Lesmystresdel'amour", |
| 46 | 'Genre=000-017-020', | 124 | "contentName=Lojet'emmnerai", |
| 47 | 'Genre=000-017-023', | 125 | 'contentName=Lost', |
| 48 | 'Genre=000-017-024', | 126 | 'contentName=Motus', |
| 49 | 'TimeBin=TIME_00_TO_01', | 127 | 'contentName=Mreetfille', |
| 50 | 'TimeBin=TIME_01_TO_02', | 128 | 'contentName=Mtodesplages', |
| 51 | 'TimeBin=TIME_05_TO_06', | 129 | 'contentName=Mtooutremer', |
| 52 | 'TimeBin=TIME_06_TO_07', | 130 | 'contentName=NewYork911', |
| 53 | 'TimeBin=TIME_07_TO_08', | 131 | 'contentName=Petitssecretsentrevoisins', |
| 54 | 'TimeBin=TIME_08_TO_09', | 132 | 'contentName=Profilage', |
| 55 | 'TimeBin=TIME_09_TO_10', | 133 | 'contentName=Quatremariagespourunelunedemiel', |
| 56 | 'TimeBin=TIME_10_TO_11', | 134 | 'contentName=Rendez-moimafille', |
| 57 | 'TimeBin=TIME_11_TO_12', | 135 | 'contentName=Rescueunitspciale', |
| 58 | 'TimeBin=TIME_12_TO_13', | 136 | 'contentName=Sanstabou', |
| 59 | 'TimeBin=TIME_13_TO_14', | 137 | 'contentName=Scandaleaupensionnat', |
| 60 | 'TimeBin=TIME_14_TO_15', | 138 | 'contentName=SecretStory', |

| 61 | 'TimeBin=TIME_15_TO_16', | 139 | 'contentName=Seulecontretous', |
|---|---|---|---|
| 62 | 'TimeBin=TIME_16_TO_17', | 140 | 'contentName=SexCrimes', |
| 63 | 'TimeBin=TIME_17_TO_18', | 141 | 'contentName=TFou', |
| 64 | 'TimeBin=TIME_18_TO_19', | 142 | "contentName=That'70sShow", |
| 65 | 'TimeBin=TIME_19_TO_20', | 143 | 'contentName=TheBest,lemeilleurartiste', |
| 66 | 'TimeBin=TIME_20_TO_21', | 144 | 'contentName=TIfoot', |
| 67 | 'TimeBin=TIME_21_TO_22', | 145 | 'contentName=TImatin', |
| 68 | 'TimeBin=TIME_22_TO_23', | 146 | 'contentName=TImatin(suite)', |
| 69 | 'TimeBin=TIME_23_TO_24', | 147 | 'contentName=TopModels', |
| 70 | "contentName=112Unitd'urgence", | 148 | 'contentName=Tousdiffrents', |
| 71 | 'contentName=12/13', | 149 | 'contentName=Ultimevengeance', |
| 72 | 'contentName=19/20', | 150 | 'contentName=Uncoeurgagnant', |
| 73 | 'contentName=2900Happiness', | 151 | 'contentName=Unefamilleenor', |
| 74 | 'contentName=50mnInside', | 152 | 'contentName=Unenfantvendre', |
| 75 | 'contentName=@vosclips', | 153 | 'contentName=Unevievole', |
| 76 | 'contentName=AlerteCobra', | 154 | 'contentName=Untransatpourhuit', |
| 77 | 'contentName=All,docteurs!', | 155 | "contentName=Voleused'enfant", |
| 78 | 'contentName=Apparences', | 156 | 'contentName=Vuduciel' |

1. [0.4472135954999579, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.4472135954999579, 0.0, 0.0, 0.0, 0.0, 0.0, 0.0, 0.0, 0.0, 0.0, 0.0, 0.0, 0.0, 0.0, 0.0, 0.4472135954999579, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.4472135954999579, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0]

2. [0.4472135954999579, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.4472135954999579, 0.0, 0.0, 0.0, 0.0, 0.0, 0.0, 0.0, 0.0, 0.0, 0.0, 0.0, 0.0, 0.0, 0.0, 0.4472135954999579, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.4472135954999579, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.4472135954999579, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0]

3. [0.4472135954999579, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.4472135954999579, 0.0, 0.0, 0.0, 0.0, 0.0, 0.0, 0.0, 0.0, 0.0, 0.0, 0.0, 0.0, 0.0, 0.0, 0.4472135954999579, 0.0, 0.0, 0.0, 0.0, 0.0, 0.0, 0.0, 0.0, 0.0, 0.0, 0.0, 0.0, 0.0, 0.0, 0.0, 0.0, 0.0, 0.4472135954999579, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.4472135954999579, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0]

EP 2 945 113 A1

4. [0.4472135954999579, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.4472135954999579, 0.0, 0.0, 0.0, 0.0, 0.0, 0.0, 0.0, 0.0, 0.0, 0.0, 0.0, 0.0, 0.0, 0.0, 0.0, 0.4472135954999579, 0.0, 0.0, 0.0, 0.0, 0.0, 0.0, 0.0, 0.0, 0.0, 0.0, 0.0, 0.0, 0.0, 0.4472135954999579, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.4472135954999579, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0]

5. [0.4472135954999579, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.4472135954999579, 0.0, 0.0, 0.0, 0.0, 0.0, 0.0, 0.0, 0.0, 0.0, 0.0, 0.0, 0.0, 0.0, 0.0, 0.0, 0.4472135954999579, 0.0, 0.0, 0.0, 0.0, 0.0, 0.0, 0.0, 0.0, 0.0, 0.0, 0.0, 0.0, 0.0, 0.4472135954999579, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.4472135954999579, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0, 0.0]

# Appendix E: Principal Components Transformed Data (First 5 sample components)

1. 0.23587842,  0.14946867,  -0.17585167,  0.13139183,

-0.31627483,  -0.39497390,  0.07660378,  0.08766362,

0.03762537,  -0.15875521,  0.16909039,  0.15650570,

0.02358137,  -0.00495919,  -0.03615262,  0.05909988,

0.02132706,  -0.15558553,  0.04158880,  -0.02313809,

0.00064777,  -0.05178116,  -0.10010573,  -

0.09614457,  -0.01539681,  -0.21044985,  -

0.07128227,  -0.06649227,  -0.05724467,  -

0.06744637,  -0.00666281,  -0.01099359,  0.07031066,

-0.04875042,  -0.00283443,  0.00400780,  -

0.04296022,  0.01895264,  0.03287755,  0.00081289,

-0.27423056,  -0.13717007,  -0.02862899,

0.10025152,  -0.05235116,  -0.13443402,  0.00892675,

-0.00790756,  0.00819826,  -0.00725622,  0.02067162,

0.09014138,  0.03420665,  0.13886697,  0.01367068,

0.06853751,  0.24909197,  -0.03062516,  -0.08982181,

0.00000000,  -0.00000000,  0.07909013,  0.06658069,

0.00466783,  -0.06319241,  0.03729282,  0.07084108,

-0.02547249,  0.00002708,  0.03527404,  0.00437138,

-0.14957500,  -0.07304709,  -0.13534396,

0.09079443,  -0.08079163,  0.05675173,  -0.02798602,

0.01181194,  0.02570396,  0.04483854,  -0.03595761,

-0.00532690,  -0.00165938,  -0.00000000,

0.00000000,  0.00000000,  -0.00000000,  -0.00000000,

0.00099273,  -0.00546832,  -0.00158444,  -

0.02329867,  0.04115445,  -0.00039223,  -0.01975689,

0.00264818,  -0.02207817,  -0.02517590,  -

0.06296259,  -0.02445435,  -0.04204917,  0.02792542,

-0.03339890,  0.04569582,  -0.04795001,  0.00569861,

0.00257097,  0.00156691,  -0.00282509,  0.00000000,

0.00000000,  0.00000000,  -0.00000000,  0.00000000,

```
0.00000000,  -0.00000000,  -0.00000000,  0.00000000,
0.00000000,  0.00000000,  0.00000000,  -0.00000000,
-0.00000000,  0.00000000,  0.00000000,  -0.00000000,
-0.00000000,  -0.00000000,  -0.00000000,

0.00000000,  0.00000000,  0.00000000,  -0.00000000,
-0.00000000,  0.00000000,  0.00000000,  0.00000000,
-0.00000000,  -0.00000000,  -0.00000000,  -
0.00000000,  -0.00000000,  -0.00000000,  -
0.00000000,  -0.00000000,  -0.00000000,  0.00000000,
0.00000000,  -0.00000000,  0.00000000,  0.00000000,
0.00000000,  -0.00000000,  -0.00000000,  0.00000000
```

```
2. -0.59101536,  -0.23042303,  -0.00109111,
0.08929142,  -0.22223883,  -0.25283767,  -
0.01458476,  -0.08089564,  0.09301062,  0.03179140,
-0.00820738,  -0.14157671,  0.15805001,  -
0.21491406,  -0.03486025,  0.03517626,  0.01520596,
-0.06984239,  0.01575442,  0.00521970,  -0.01403371,
0.01066811,  -0.00231233,  0.01634239,  -0.00109901,
-0.00204972,  0.00399419,  -0.01786437,  -
0.00456842,  -0.01761260,  -0.00443695,  -
0.00774450,  0.00610608,  -0.00219172,  -0.00675289,
0.00117956,  -0.01380335,  -0.02157088,  -
0.00278665,  0.01118745,  0.00009677,  0.00448477,
-0.02266608,  -0.00246412,  0.00316733,  0.01731045,
0.00117806,  0.01312455,  0.00313076,  -0.00851488,
0.01157154,  0.00095003,  -0.00779185,  0.02058817,
0.01196334,  0.00565415,  -0.00128405,  0.00615943,
-0.00710766,  0.00000000,  0.00000000,  -0.01202044,
-0.00753769,  0.00658450,  -0.00204753,  -
0.00942808,  -0.00954239,  0.00755679,  0.00519861,
-0.00176424,  0.00855092,  -0.00382624,  -
0.00068939,  -0.00069928,  0.00321164,  0.00695700,
-0.00337326,  0.00475178,  -0.00022038,  0.00069444,
```

-0.00254541,  0.00224659,  0.00182290,  -0.00156063,
0.00000000,  -0.00000000,  -0.00000000,  0.00000000,
-0.00000000,  -0.00202629,  -0.00301069,  -
0.00324529,  -0.01483923,  -0.01257921,  0.00137100,
0.00005315,  0.00888956,  -0.01013682,  0.00451384,
0.01101358,  -0.00114453,  0.00895127,  0.00195792,
0.00453420,  -0.00766774,  -0.00372159,  -
0.00219126,  -0.00175323,  -0.00133053,  0.00000812,
-0.00000000,  -0.00000000,  -0.00000000,
0.00000000,  0.00000000,  0.00000000,  0.00000000,
0.00000000,  0.00000000,  0.00000000,  0.00000000,
0.00000000,  -0.00000000,  -0.00000000,  0.00000000,
0.00000000,  0.00000000,  0.00000000,  0.00000000,
0.00000000,  -0.00000000,  -0.00000000,  -
0.00000000,  -0.00000000,  -0.00000000,  -
0.00000000,  -0.00000000,  0.00000000,  0.00000000,
-0.00000000,  -0.00000000,  0.00000000,  0.00000000,
0.00000000,  -0.00000000,  -0.00000000,  0.00000000,
-0.00000000,  -0.00000000,  0.00000000,  -
0.00000000,  -0.00000000,  -0.00000000,  -
0.00000000,  -0.00000000,  -0.00000000

3. 0.22807650,  0.13861081,  -0.31849261,  0.21311565,
-0.21828106,  -0.35779402,  -0.01340730,  -
0.09827492,  0.02051018,  -0.06151999,  -0.09931937,
0.08620421,  -0.00788210,  -0.01813573,  -
0.09877204,  -0.10214610,  -0.08195919,  -
0.22883210,  0.06283061,  -0.08075203,  -0.35736115,
0.08199880,  0.02336514,  -0.14204128,  -0.04266238,
0.20743332,  -0.18372188,  -0.07903617,  -
0.02030998,  0.09201516,  0.04173448,  -0.22617122,
-0.04714881,  -0.10056451,  0.04497100,  -
0.04671847,  0.07783060,  0.06942003,  -0.04969651,
0.12142969,  0.06457885,  0.03019876,  0.03126885,

0.01270519,  -0.05746668,  0.01373259,  0.08109696,
0.12152091,  0.03835732,  0.03852976,  0.05805250,
0.04020765,  -0.00261405,  -0.14871752,  -
0.01731347,  0.06123239,  -0.00639174,  0.01523523,
0.00625887,  -0.00000000,  -0.00000000,  0.07910048,
0.03934859,  -0.00511653,  0.03819446,  0.03961351,
0.04352799,  0.00939994,  0.00492203,  0.02800674,
-0.02612790,  -0.00186771,  0.00039297,  0.02031252,
0.00607065,  0.02474574,  -0.01786451,  -0.02124186,
-0.03326914,  0.03405439,  -0.00100074,  -
0.01821196,  -0.01612400,  -0.01778259,  -
0.00000000,  0.00000000,  0.00000000,  -0.00000000,
-0.00000000,  -0.01061663,  -0.00174329,
0.01234771,  -0.01031060,  -0.02274295,  0.01445363,
-0.02317073,  -0.02779933,  0.05992591,  -
0.05342817,  -0.00287477,  0.07398528,  -0.01417350,
0.00073437,  -0.02124357,  0.01625987,  0.01711623,
0.02491326,  0.00478337,  0.00087817,  -0.00232017,
-0.00000000,  -0.00000000,  -0.00000000,
0.00000000,  -0.00000000,  -0.00000000,  -
0.00000000,  -0.00000000,  0.00000000,  0.00000000,
-0.00000000,  -0.00000000,  0.00000000,  0.00000000,
0.00000000,  0.00000000,  0.00000000,  0.00000000,
0.00000000,  0.00000000,  -0.00000000,  -0.00000000,
-0.00000000,  0.00000000,  0.00000000,  0.00000000,
0.00000000,  -0.00000000,  0.00000000,  -0.00000000,
-0.00000000,  -0.00000000,  -0.00000000,
0.00000000,  0.00000000,  0.00000000,  -0.00000000,
0.00000000,  0.00000000,  -0.00000000,  0.00000000,
0.00000000,  0.00000000,  -0.00000000,  -0.00000000,
-0.00000000

4. 0.18412359,  -0.01005159,  -0.03705755,  0.02895824,
-0.29253049,  -0.33938112,  -0.03054424,  -

0.03562673, 0.14081475, 0.04495543, -0.05388385,
-0.06870293, 0.03165072, 0.05328976, -0.02530452,
-0.06913138, -0.17323223, 0.07790973, 0.03665674,
0.47786796, 0.10551874, 0.07349027, -0.04997423,
-0.03865896, 0.05525997, 0.02846873, -0.02209266,
0.07193760, 0.10602210, -0.02352575, 0.04090952,
-0.11133724, -0.14919411, -0.00685000, -
0.02336187, 0.04618102, 0.14710402, -0.12390674,
-0.18349270, 0.08698472, -0.03931540, 0.08211710,
0.14672472, 0.05500396, 0.11944329, -0.13076606,
-0.06244768, -0.19986143, -0.03190688,
0.19337355, -0.00358972, -0.01134448, 0.02561298,
0.03439312, -0.03698415, -0.00784559, -
0.01628418, 0.03376966, 0.01127638, 0.12897649,
-0.36884017, 0.00862335, 0.01092998, -0.03241270,
0.01053777, 0.01711148, -0.01165136, -0.02201190,
0.00146949, 0.00406273, -0.00730900, 0.00168725,
0.01062381, 0.00205726, -0.00782611, -0.00212296,
-0.00289999, 0.00141355, -0.00366924, 0.00639255,
0.00199825, -0.00159892, -0.00085678, -
0.00003158, 0.00000000, -0.00000000, -0.00000000,
0.00000000, -0.00000000, -0.00004048, 0.00150297,
0.00022601, 0.00421644, 0.00410611, -0.00428229,
0.00468401, -0.00221911, 0.00128708, 0.00053000,
-0.00332642, -0.00869785, -0.00596383,
0.00021990, 0.00105117, -0.00047343, -0.00242754,
-0.00002174, -0.00148401, -0.00072176,
0.00054977, -0.00000000, -0.00000000, -
0.00000000, 0.00000000, -0.00000000, 0.00000000,
0.00000000, 0.00000000, 0.00000000, 0.00000000,
0.00000000, 0.00000000, -0.00000000, -0.00000000,
-0.00000000, -0.00000000, -0.00000000, -
0.00000000, -0.00000000, -0.00000000, 0.00000000,
0.00000000, 0.00000000, 0.00000000, 0.00000000,

```
   0.00000000,   0.00000000,   0.00000000,   0.00000000,
   0.00000000,   0.00000000,  -0.00000000,  -0.00000000,
  -0.00000000,   0.00000000,   0.00000000,  -0.00000000,
   0.00000000,   0.00000000,  -0.00000000,   0.00000000,
   0.00000000,  -0.00000000,  -0.00000000,  -
   0.00000000,   0.00000000
```

```
5. -0.03878495,   0.14601272,   0.07783936,  -0.09735465,
  -0.13929131,   0.19898421,   0.17423820,  -0.27245674,
  -0.22318074,  -0.15634208,   0.00236241,  -
   0.23839630,  -0.06696931,   0.01739986,   0.00461563,
  -0.14717277,  -0.40345902,   0.23076894,   0.04546763,
  -0.11304262,   0.04226348,  -0.10583150,   0.01207139,
   0.05232978,  -0.05688534,  -0.05081772,   0.07703678,
  -0.06283843,  -0.17228473,   0.06547591,  -
   0.03823262,   0.04935886,   0.06980274,   0.00969549,
   0.02913165,  -0.03934223,   0.04245229,  -0.00983116,
   0.01508408,   0.02198975,   0.00746266,   0.01980101,
   0.02037596,   0.03231377,  -0.02425487,  -0.05115823,
   0.06815159,  -0.00440888,   0.00679797,   0.03736530,
   0.02783787,   0.00262006,   0.02645842,  -0.01909061,
  -0.04167906,  -0.01030483,   0.01019649,   0.01198001,
   0.00963682,  -0.00000000,   0.00000000,  -0.00638925,
  -0.00316872,  -0.02922105,  -0.00064997,  -
   0.00115214,  -0.01281782,  -0.03779666,   0.01624591,
  -0.03314142,  -0.01077984,  -0.03666399,  -
   0.00835245,   0.01364980,  -0.02276052,  -0.03061028,
   0.01327521,   0.00654154,  -0.00567772,  -0.00407078,
   0.03596165,   0.01752018,  -0.01978854,  -0.01650954,
   0.14529035,   0.10851128,  -0.22124659,   0.13186669,
  -0.00632034,   0.03958431,   0.01294228,   0.01835146,
  -0.05379970,  -0.08829609,  -0.04160375,  -
   0.00484401,   0.02307944,  -0.02113630,  -0.00263968,
   0.00513422,   0.00604238,   0.00831688,  -0.00538919,
```

```
0.00619422,  0.00482578,  0.00157799,  0.00875909,
0.00431117,  0.00255922,  0.00137257,  -0.00000000,
-0.00000000,  -0.00000000,  0.00000000,  -
0.00000000,  0.00000000,  0.00000000,  0.00000000,
0.00000000,  0.00000000,  -0.00000000,  -0.00000000,
-0.00000000,  -0.00000000,  0.00000000,  0.00000000,
-0.00000000,  -0.00000000,  -0.00000000,  -
0.00000000,  0.00000000,  0.00000000,  -0.00000000,
-0.00000000,  -0.00000000,  0.00000000,  0.00000000,
-0.00000000,  0.00000000,  0.00000000,  0.00000000,
0.00000000,  0.00000000,  0.00000000,  -0.00000000,
-0.00000000,  0.00000000,  0.00000000,  0.00000000,
-0.00000000,  -0.00000000,  -0.00000000,  -
0.00000000,  0.00000000,  0.00000000,  -0.00000000
```

## Appendix F: Python Program for Kmeans Clustering & Output

**PYTHON CODE**

```
#!/usr/bin/python

import warnings

from sklearn.feature_extraction import DictVectorizer

from sklearn.preprocessing import normalize

from sklearn import metrics

from sklearn.cluster import KMeans

from sklearn.cluster import DBSCAN

import json

import numpy as np

from numpy import *

from scipy import linalg as LA

from pprint import pprint


#Feature Extraction

vec = DictVectorizer()

f = open('HHID_620428623.json')

s = f.read().strip()

f.close()


j = json.loads(s)

X = normalize(vec.fit_transform(j).toarray())


#PCA

data = X

mn = np.mean(data, axis=0)

data -= mn

C = np.cov(data.T)

evals, evecs = LA.eig(C)

idx = np.argsort(evals)[::-1]

evecs = evecs[:,idx]

evals = evals[idx]

D = np.dot(evecs.T, data.T).T
```

```
warnings.simplefilter("ignore")


#Clustering & Cluster Analysis
for i in range(2,10):
    km = KMeans(n_clusters=i, init='k-means++',
n_init=100)
    km.fit(evecs)
    print("k= %d  Silhouette Coefficient: %0.3f"  % (i,
metrics.silhouette_score(evecs, km.labels_)))



km = KMeans(n_clusters=3, init='k-means++', n_init=100)
km.fit(D)
pprint (km.labels_)
```

OUTPUT
```
k= 2  Silhouette Coefficient: 0.026
k= 3  Silhouette Coefficient: 0.028
k= 4  Silhouette Coefficient: 0.005
k= 5  Silhouette Coefficient: 0.007
k= 6  Silhouette Coefficient: 0.018
k= 7  Silhouette Coefficient: -0.012
k= 8  Silhouette Coefficient: -0.009
k= 9  Silhouette Coefficient: -0.003
array([2, 1, 2, 2, 2, 2, 2, 1, 2, 0, 0, 2, 1, 2, 2, 2, 2,
1, 2, 2, 2, 2, 1,
       2, 2, 2, 1, 2, 0, 0, 2, 2, 1, 2, 2, 2, 1, 2, 2, 2,
2, 2, 1, 2, 1, 2,
       2, 0, 2, 2, 1, 2, 2, 1, 2, 2, 0, 2, 2, 1, 2, 2, 2,
1, 2, 1, 0, 2, 2,
       1, 1, 2, 2, 2, 0, 1, 2, 1, 2, 2, 2, 1, 2, 1, 0, 0,
2, 2, 1, 2, 2, 2,
```

```
        2, 2, 2, 0, 2, 2, 1, 2, 2, 2, 2, 0, 0, 2, 2, 2, 1,
2, 2, 2, 0, 1, 2,
        2, 2, 2, 1, 2, 2, 2, 0, 1, 0, 0, 2, 2, 1, 2, 2, 2,
1, 2, 0, 2, 2, 2,
        1, 2, 2, 2, 2, 2, 1, 2, 2, 0, 1, 2, 2, 1, 2, 2, 2,
2, 1, 2, 2, 2, 2,
        2, 2, 1, 2, 1, 2, 2, 2, 0, 2, 1, 2, 2, 1, 2, 2, 2,
2, 2, 2, 0, 1, 0,
        0, 2, 2, 2, 1, 2, 2, 0, 1, 2, 2, 0, 2, 0, 0, 0, 0,
2, 2, 0, 1, 0, 0,
        0, 2, 2, 2, 1, 2, 1, 2, 2, 2, 1, 2, 2, 1, 0, 0, 2,
1, 2, 1, 1, 0, 0,
        2, 2, 1, 2, 2, 2, 2, 1, 0, 1, 0, 2, 1, 2, 2, 2, 2,
1, 1, 2, 0, 2, 1,
        2, 2, 1, 2, 0, 0, 0, 2, 2, 1, 2, 2, 1, 2])
```

## Appendix G: Means and Standard-deviations for Age for Content

| S.No | Content Name | Mean Age | Mean Std Dev |
|---|---|---|---|
| 1 | 112Unitd'urgence | 22 | 0.4228 |
| 2 | 13-Dec | 35 | 0.3514 |
| 3 | 19/20 | 37 | 0.3518 |
| 4 | 2900Happiness | 34 | 0.7287 |
| 5 | 50mnInside | 34 | 0.6208 |
| 6 | @vosclips | 32 | 0.7261 |
| 7 | AlerteCobra | 20 | 0.7250 |
| 8 | All,docteurs! | 20 | 0.6268 |
| 9 | Apparences | 47 | 0.0760 |
| 10 | C'estauprogramme | 41 | 0.7841 |
| 11 | Catchamricain | 49 | 0.8822 |
| 12 | CesoirtoutestpermisavecArthur | 15 | 0.6290 |
| 13 | Com'enpolitique | 35 | 0.4406 |
| 14 | Crimepassionnel | 57 | 0.7072 |
| 15 | CyborgConquest | 59 | 0.2394 |
| 16 | Dansquelleta-gre | 58 | 0.0403 |
| 17 | Demainlaune | 48 | 0.3412 |
| 18 | Desjoursetdesvies | 53 | 0.4639 |
| 19 | Dexter | 26 | 0.0424 |
| 20 | Djvu | 37 | 0.6935 |
| 21 | DoctorWho | 58 | 0.3390 |
| 22 | DrHouse | 32 | 0.2324 |
| 23 | Drlesdedames | 28 | 0.7351 |
| 24 | Enquteurmalgrlui | 35 | 0.7499 |
| 25 | Espritscriminels | 19 | 0.6313 |
| 26 | FBI | 34 | 0.8114 |
| 27 | FortBoyard | 40 | 0.7662 |
| 28 | Georgiadanstoussestats | 20 | 0.1165 |
| 29 | Heartland | 29 | 0.6590 |

| 30 | Intimeconviction | 41 | 0.5348 |
|---|---|---|---|
| 31 | Jessie | 32 | 0.2624 |
| 32 | JeuxdelaFrancophonie | 38 | 0.2429 |
| 33 | Josphine,angegardien | 22 | 0.8571 |
| 34 | Journal | 34 | 0.2396 |
| 35 | L'affichedujour | 59 | 0.3782 |
| 36 | L'empiredutigre | 58 | 0.8527 |
| 37 | L'espritd'uneautre | 45 | 0.3556 |
| 38 | L'ledesvrits | 17 | 0.4042 |
| 39 | Laconvictiondemafille | 27 | 0.2475 |
| 40 | Ladisparitiondemonenfant | 45 | 0.1220 |
| 41 | LaminuteduChat | 19 | 0.2468 |
| 42 | Legrand | 36 | 0.3886 |
| 43 | Legrandjournal | 32 | 0.0551 |
| 44 | Lejourotoutabascul | 53 | 0.6353 |
| 45 | Lejusteprix | 25 | 0.7728 |
| 46 | Lelitdudiable | 28 | 0.3252 |
| 47 | Lemag | 18 | 0.7851 |
| 48 | Lepacte | 46 | 0.0779 |
| 49 | Lepactedesnon-dits | 24 | 0.8663 |
| 50 | Lesailesdelaterreur | 38 | 0.3809 |
| 51 | Lesch'tisHollywood | 53 | 0.4084 |
| 52 | Lesdouzecoupsdemidi | 43 | 0.6870 |
| 53 | Lesexperts | 57 | 0.8538 |
| 54 | Lesmystresdel'amour | 41 | 0.4590 |
| 55 | Lojet'emmnerai | 53 | 0.0778 |
| 56 | Lost | 38 | 0.7375 |
| 57 | Motus | 39 | 0.8632 |
| 58 | Mreetfille | 24 | 0.7944 |
| 59 | Mtodesplages | 26 | 0.5725 |
| 60 | Mtooutremer | 26 | 0.2105 |
| 61 | NewYork911 | 25 | 0.4975 |
| 62 | Petitssecretsentrevoisins | 30 | 0.9168 |

| 63 | Profilage | 30 | 0.9306 |
|----|-----------|----|--------|
| 64 | Quatremariagespourunelunedemiel | 43 | 0.2729 |
| 65 | Rendez-moimafille | 31 | 0.3709 |
| 66 | Rescueunitspciale | 23 | 0.0603 |
| 67 | Sanstabou | 24 | 0.3929 |
| 68 | Scandaleaupensionnat | 33 | 0.4444 |
| 69 | SecretStory | 47 | 0.9364 |
| 70 | Seulecontretous | 30 | 0.1991 |
| 71 | SexCrimes | 16 | 0.8172 |
| 72 | TFou | 17 | 0.4476 |
| 73 | That'70sShow | 56 | 0.8404 |
| 74 | TheBest,lemeilleurartiste | 28 | 0.7918 |
| 75 | Tlfoot | 46 | 0.2556 |
| 76 | Tlmatin | 21 | 0.9115 |
| 77 | Tlmatin(suite) | 29 | 0.6267 |
| 78 | TopModels | 40 | 0.9155 |
| 79 | Tousdiffrents | 42 | 0.7134 |
| 80 | Ultimevengeance | 32 | 0.2065 |
| 81 | Uncoeurgagnant | 49 | 0.7754 |
| 82 | Unefamilleenor | 55 | 0.4547 |
| 83 | Unenfantvendre | 46 | 0.8212 |
| 84 | Unevievole | 56 | 0.6411 |
| 85 | Untransatpourhuit | 30 | 0.5395 |
| 86 | Voleused'enfant | 43 | 0.5202 |
| 87 | Vuduciel | 19 | 0.7834 |

**Claims**

1. A method for audience segmentation, the method comprising:

preparing a plurality of guidebooks of prior probability distributions for content items and user profile attributes, the prior probabilities distributions and user profile attributes being extractable from within audience measurement data;
receiving raw audience measurement data;
analyzing, at a processor, the received raw audience measurement data using the prepared plurality of guidebooks;
generating a plurality of clusters of data per user household as a result of the analyzing;

correlating viewing activity to each cluster within an identified household;
predicting a profile of a viewer corresponding to each cluster within the identified household;
applying classifier rules in order to assign viewing preference tags to each predicted profile; and
assigning each predicted profile viewing preferences based on the viewing preference tags assigned to that profile.

2. The method according to claim 1 wherein the guidebooks comprise at least:

a guidebook comprising prior probabilities per viewer attribute;
a guidebook comprising an assignment of viewer preference tags to individual users; and
a guidebook comprising a list of probabilities of family types.

3. The method according to either of claim 1 or claim 2 wherein the generating a plurality of clusters of data per user household comprises:

receiving the raw audience measurement data;
extracting data concerning viewer habits;
sorting the extracted data into categorical data and numerical data;
transforming the sorted data into a high-dimensional vector representation of the raw data;
detecting outliers in the high-dimensional vector representation;
eliminating outliers from the high-dimensional vector representation; and
correlating the high-dimensional vector representation into clusters of individuals per household.

4. The method according to claim 3 wherein data concerning the viewer habits comprises:

viewing activity;
content metadata;
user data;
user interface navigation data; and
frequency response data.

5. The method according to any of claims 1 - 4 wherein the raw audience measurement data comprises, at least in part, collected viewing records of which content was consumed on devices associated with members of a household.

6. The method according to claim 5 wherein the viewing records include at least some of the following:

viewing activity records;
content metadata of consumed content;
user data;
user interface navigation data; and
frequency response data.

7. The method according to any of claims 1 - 6 wherein the prepared plurality of guidebooks are used to define classifier rules to assign labels to the clusters of data.

8. The method according to any of claims 1 - 7 wherein aggregated sets of viewing activity correlate with an individual's viewing habits.

9. The method according to any of claims 1 - 8 wherein each user in a household is associated with one of the clusters.

10. The method according to any of claims 1 - 9 wherein the classifier rules are determined based on the prepared plurality of guidebooks.

11. A system for audience segmentation, the system comprising:

a plurality of guidebooks of prior probability distributions for content items and user profile attributes, the prior probabilities and user profile attributes being extractable from within audience measurement data;
a receiver which receives raw audience measurement data;

a processor which analyzes the received raw audience measurement data by using the prepared plurality of guidebooks;

a generator which generates a plurality of clusters of data per user household as a result of the analyzing;

a processor which correlates viewing activity to each cluster within an identified household;

a profile predictor which predicts which profile of each viewer within the identified household corresponds to each cluster;

a classifier which applies classifier rules in order to assign viewing preference tags to each predicted profile; and

an assigner which assigns each predicted profile viewing preferences based on the viewing preference tags assigned to that profile.

12. The system according to claim 11 wherein the guidebooks comprise at least:

a guidebook comprising prior probabilities per viewer attribute;

a guidebook comprising an assignment of viewer preference tags to individual users; and

a guidebook comprising a list of probabilities of family types.

13. The system according to either of claim 11 or claim 12 wherein the generator which generates a plurality of clusters of data per user household comprises:

a raw audience measurement data receiver;

a viewer habits data extractor;

a sorter which sorts the extracted data into categorical data and numerical data;

a data transformer which transforms the sorted data into a high-dimensional vector representation of the raw data;

an outliers detector which detects outliers in the high-dimensional vector representation;

an eliminator which eliminates outliers from the high-dimensional vector representation; and

a correlater which correlates the high-dimensional vector representation into clusters of individuals per household.

14. The system according to claim 13 wherein data concerning the viewer habits comprises:

viewing activity;

content metadata;

user data;

user interface navigation data; and

frequency response data.

15. The system according to any of claims 11 - 14 wherein the raw audience measurement data comprises, at least in part, collected viewing records of which content was consumed on devices associated with members of a household.

16. The system according to claim 15 wherein the viewing records include at least some of the following:

viewing activity records;

content metadata of consumed content;

user data;

user interface navigation data; and

frequency response data.

17. The system according to any of claims 11 - 16 wherein the prepared plurality of guidebooks are used to define classifier rules to assign labels to the clusters of data.

18. The system according to any of claims 11 - 17 wherein aggregated sets of viewing activity correlate with an individual's viewing habits.

19. The system according to any of claims 11 - 18 wherein each user in a household is associated with one of the clusters.

20. The system according to any of claims 11 - 19 wherein the classifier rules are determined based on the prepared plurality of guidebooks.

FIG. 1

FIG. 2

**Guide Book Preparation**

Knowledge Based Classification

330    340

Viewing Activity    Viewer Identity

310

Audience Measurement Data

350

Apply classifier rules to assign viewing preference tags to identified individuals

KBS Classifier Rules

360

320    Per Program; Per Attribute

Guidebooks of Prior Probabilities    370

$x$

FIG. 3

FIG. 4

EP 2 945 113 A1

FIG. 5

EP 2 945 113 A1

PREPARE A PLURALITY OF GUIDEBOOKS OF PRIOR PROBABILITY DISTRIBUTIONS FOR PROGRAM ENTITIES AND USER PROFILE ATTRIBUTES, THE PRIOR PROBABILITIES AND USER PROFILE ATTRIBUTES BEING AVAILABLE WITHIN THE AUDIENCE MEASUREMENT DATA

ANALYZE RECEIVED RAW AUDIENCE MEASUREMENT DATA BY USING THE PREPARED PLURALITY OF GUIDEBOOKS IN ORDER TO GENERATE A PLURALITY OF CLUSTERS OF DATA PER USER HOUSEHOLD

CORRELATE VIEWING ACTIVITY TO EACH CLUSTER WITHIN AN IDENTIFIED HOUSEHOLD

PREDICT A PROFILE OF A VIEWER CORRESPONDING TO EACH CLUSTER WITHIN AN IDENTIFIED HOUSEHOLD

APPLY CLASSIFIER RULES IN ORDER TO ASSIGN VIEWING PREFERENCE TAGS TO EACH PREDICTED PROFILE

ASSIGN EACH PREDICTED PROFILE VIEWING PREFERENCES BASED ON THE VIEWING PREFERENCE TAGS ASSIGNED TO THAT PROFILE

FIG. 6

FIG. 7A

HOUSEHOLD VIEWING ACTIONS

FIG. 7B

Europäisches
Patentamt

European
Patent Office

Office européen
des brevets

# EUROPEAN SEARCH REPORT

Application Number

EP 15 16 6918

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/104690 A1 (SIMULMEDIA INC [US]; STORAN JEFFREY [US]; ANGELES PATRICK [US]; MORGAN) 16 September 2010 (2010-09-16)<br>* paragraph [0037] - paragraph [0039] *<br>* paragraph [0048] - paragraph [0053] *<br>* paragraph [0063] *<br>* paragraph [0067] - paragraph [0071] *<br>* paragraph [0083] *<br>* paragraph [0087] - paragraph [0089] * | 1-20 | INV.<br>G06Q30/02<br>H04N21/25<br>H04N21/258<br>H04N21/442<br>H04N21/45 |
| X | US 2013/254787 A1 (COX EARL [US] ET AL) 26 September 2013 (2013-09-26)<br>* paragraph [0116] - paragraph [0121] *<br>* paragraph [0128] - paragraph [0129] *<br>* paragraph [0133] - paragraph [0136] *<br>* figures 9, 11 * | 1-20 | |
| X | WO 01/65453 A1 (EXPANSE NETWORKS INC [US]; BLASKO JOHN P [US]) 7 September 2001 (2001-09-07)<br>* page 2, line 7 - page 3, line 4 *<br>* page 11, line 20 - page 12, line 24 *<br>* page 29, line 1 - line 33 * | 1-20 | |
| A | US 2002/129368 A1 (SCHLACK JOHN A [US] ET AL) 12 September 2002 (2002-09-12)<br>* paragraph [0126] - paragraph [0128] *<br>* paragraph [0198] - paragraph [0199] *<br>* figure 2A * | 1-20 | TECHNICAL FIELDS SEARCHED (IPC)<br><br>G06Q<br>H04N |
| A | WO 01/17250 A1 (ISMAIL LABEEB K [US]; GOGOI AMAR N [US]; MEHTA MANU [US]) 8 March 2001 (2001-03-08)<br>* page 54, line 3 - page 55, line 26 *<br>* page 52, line 6 - line 16 *<br>* page 48, line 8 - line 21 * | 1-20 | |

-/--

The present search report has been drawn up for all claims

| Place of search | Date of completion of the search | Examiner |
|---|---|---|
| Berlin | 9 September 2015 | Le Gleut, Ronan |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

& : member of the same patent family, corresponding
 document

EPO FORM 1503 03.82 (P04C01)

Europäisches
Patentamt

European
Patent Office

Office européen
des brevets

# EUROPEAN SEARCH REPORT

Application Number

EP 15 16 6918

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 717 213 A1 (ACCENTURE GLOBAL SERVICES LTD [IE]) 9 April 2014 (2014-04-09)<br>* paragraph [0015] - paragraph [0021] *<br>* paragraph [0028] - paragraph [0030] *<br>* paragraph [0038] - paragraph [0044] *<br>----- | 1-20 | |

TECHNICAL FIELDS
SEARCHED      (IPC)

The present search report has been drawn up for all claims

| Place of search | Date of completion of the search | Examiner |
|---|---|---|
| Berlin | 9 September 2015 | Le Gleut, Ronan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 16 6918

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2015

| Patent document cited in search report | | Publication date | Patent family member(s) | | Publication date |
|---|---|---|---|---|---|
| WO 2010104690 | A1 | 16-09-2010 | US | 2010269134 A1 | 21-10-2010 |
| | | | US | 2014075473 A1 | 13-03-2014 |
| | | | WO | 2010104690 A1 | 16-09-2010 |
| US 2013254787 | A1 | 26-09-2013 | NONE | | |
| WO 0165453 | A1 | 07-09-2001 | AU | 4908001 A | 12-09-2001 |
| | | | US | 2001049620 A1 | 06-12-2001 |
| | | | WO | 0165453 A1 | 07-09-2001 |
| US 2002129368 | A1 | 12-09-2002 | US | 8046798 B1 | 25-10-2011 |
| | | | US | 8667536 B1 | 04-03-2014 |
| | | | US | 2002129368 A1 | 12-09-2002 |
| WO 0117250 | A1 | 08-03-2001 | AU | 6947800 A | 26-03-2001 |
| | | | EP | 1230798 A1 | 14-08-2002 |
| | | | JP | 5068910 B2 | 07-11-2012 |
| | | | JP | 5475030 B2 | 16-04-2014 |
| | | | JP | 5591638 B2 | 17-09-2014 |
| | | | JP | 2004524712 A | 12-08-2004 |
| | | | JP | 2011035917 A | 17-02-2011 |
| | | | JP | 2012095357 A | 17-05-2012 |
| | | | JP | 2014078995 A | 01-05-2014 |
| | | | JP | 2014143722 A | 07-08-2014 |
| | | | WO | 0117250 A1 | 08-03-2001 |
| EP 2717213 | A1 | 09-04-2014 | AU | 2013222024 A1 | 20-03-2014 |
| | | | CA | 2825159 A1 | 28-02-2014 |
| | | | EP | 2717213 A1 | 09-04-2014 |
| | | | US | 2014067518 A1 | 06-03-2014 |

EPO FORM P0459

For more details about this annex : see Official Journal of the European Patent Office, No. 12/82